(19) Europäisches Patentamt
European Patent Office
Office européen des brevets

(11) **EP 3 568 667 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(21) Anmeldenummer: **18702121.7**

(22) Anmeldetag: **15.01.2018**

(51) Int Cl.:
**G01B 11/24** *(2006.01)*     **A61C 9/00** *(2006.01)*

(86) Internationale Anmeldenummer:
**PCT/EP2018/050891**

(87) Internationale Veröffentlichungsnummer:
**WO 2018/130693 (19.07.2018 Gazette 2018/29)**

(54) **MESSSYSTEM UND VERFAHREN ZUR KOMBINIERTEN ERFASSUNG DER OBERFLÄCHENTOPOGRAFIE UND HYPERSPEKTRALEN BILDGEBUNG**

MEASUREMENT SYSTEM AND METHOD FOR COMBINED CAPTURE OF THE SURFACE TOPOGRAPHY AND HYPERSPECTRAL IMAGING

SYSTÈME DE MESURE ET PROCÉDÉ DE DÉTECTION DE LA TOPOGRAPHIE DE SURFACE ET D'IMAGERIE HYPERSPECTRALE COMBINÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2017   DE 102017000296**

(43) Veröffentlichungstag der Anmeldung:
**20.11.2019   Patentblatt 2019/47**

(73) Patentinhaber: **Baden-Württemberg Stiftung gGmbH**
**70174 Stuttgart (DE)**

(72) Erfinder:
• **STOCK, Karl**
**73479 Ellwangen (DE)**
• **MADER, Raphael**
**89079 Ulm-Wiblingen (DE)**

(74) Vertreter: **Müller-Boré & Partner**
**Patentanwälte PartG mbB**
**Friedenheimer Brücke 21**
**80639 München (DE)**

(56) Entgegenhaltungen:
DE-A1-102005 043 627     DE-A1-102007 019 267
US-A1- 2005 283 065     US-B1- 9 494 529

EP 3 568 667 B1

## Beschreibung

Die vorliegende Erfindung betrifft ein Erfassen topographischer und ortsaufgelöster, spektraler Eigenschaften einer zu untersuchenden Oberfläche. Damit können also sowohl dreidimensionale Oberflächenstrukturen als auch die spektralen (farblichen) Eigenschaften einer Oberfläche ermittelt werden. Neben der Form- und Farberfassung können damit insbesondere auch Informationen über Materialien an der zu untersuchenden Oberfläche erfasst werden.

Anwendbar ist die Erfindung in Bereichen der 3D-Messtechnik, insbesondere im Bereich der Medizintechnik und/oder der Kosmetik ebenso wie beispielsweise auf dem Gebiet der Material- und Werkstoffkunde zur Charakterisierung von Oberflächen. Weitere Einsatzbereiche, in denen die Erfindung vorteilhaft Anwendung finden kann, umfassen beispielsweise die industrielle Messtechnik, die Qualitätssicherung in der Produktion verschiedener Branchen, die Lebensmittelkontrolle in Produktion und Handel, die Agrartechnik und die Müllsortierung.

Bereits existierende Messmethoden zur Charakterisierung von Oberflächen, insbesondere für medizinische Anwendungen, sind beispielsweise Ultraschallverfahren, die Computertomographie, die Magnetresonanztomographie, sowie die Erfassung durch Scanner und insbesondere Intraoralscanner. In der Stomatologie wird zum Beispiel konventionell eine Gebisssituation physisch mittels einer Abformmasse erfasst. Seit einigen Jahren lassen sich dahingehend vermehrt Intraoralscanner auf Basis optischer Messtechnologien finden, welche die physische Abformung fortwährend ersetzen.

Ein neueres Messverfahren zur berührungslosen Charakterisierung von Oberflächen, wie beispielsweise einem Zahn, beruht auf dem chromatisch codierten konfokalen Messprinzip mit simultaner Erfassung multipler Messpunkte in einem dreidimensionalen Raum. Diesbezüglich offenbart beispielsweise die Druckschrift DE 10 2006 007 172 B4 eine Anordnung zur schnellen, ortsaufgelösten, flächigen, spektroskopischen Analyse, bzw. zum Spectral Imaging. Ferner offenbart die Druckschrift DE 10 2007 019 267 A1 eine Messanordnung sowie ein Verfahren zum dreidimensionalen Messen von zumindest einem Teil eines Objekts. Demnach gibt es bereits verschiedene 3D-Messsysteme und Technologien zur Erfassung von Oberflächentopographien, insbesondere spektrometrische Systeme oder punktförmige Messsysteme in Kombination mit Scannern, sowie hyperspektrale Messsysteme zur bildgebenden Erfassung eines Spektrums eines von einer Oberfläche emittierten Lichtes.

US 2005/283065 A1 offenbart ein Verfahren zum Bereitstellen von Daten, die in einem Verfahren verwendet werden und die mit Messungen in der Mundhöhle assoziiert sind. Bei dem Verfahren werden mindestens eine numerische Einheit bereitgestellt, die für die dreidimensionale Oberflächengeometrie und -farbe von mindestens einem Teil der Mundhöhle repräsentativ ist, und dann manipuliert, um gewünschte Daten davon bereitstellen zu können.

DE 10 2005 043627 A1 offenbart einen Sensor, der eine Bildlinse zum Erfassen von Licht aufweist, das von einer Oberfläche eines Objekts reflektiert wurde, wobei diese als diffraktive

Linsenanordnung ausgebildet ist. Das Licht wird auf Empfänger aufgeteilt und kann über zwei verschiedene optische Pfade fokussiert werden, wobei eine Erfassungsblende zum Erfassen des entfernungsabhängigen Wellenlängenspektrums bzw. der spektralen Reflexion verwendet wird.

US 9 494 529 B1 offenbart eine konfokale chromatische Vorrichtung zum Untersuchen der Oberfläche eines Objekts wie eines Wafers, die mehrere optische Messkanäle mit Sammelöffnungen zum Sammeln des von dem Objekt reflektierten Lichts durch eine chromatische Linse an mehreren Messpunkten aufweist, und eine Vergrößerungslinse zum Einführen eines variablen oder veränderbaren Skalierungsfaktors zwischen der räumlichen Aufteilung der Sammelöffnungen und den Messpunkten.

Zur umfassenden Charakterisierung von Oberflächen muss der Benutzer allerdings bisher verschiedene Messsysteme separat bzw. getrennt voneinander anwenden. Es mangelt demnach an Möglichkeiten, welche es erlauben, verschiedene Charakteristika, wie im vorliegenden Fall, die Topographie und die Farbverteilung bzw. spektrale Eigenschaft einer Oberfläche effizient zu erfassen.

Die der Erfindung zugrunde liegende Aufgabe betrifft deshalb die Vereinfachung einer möglichst schnellen, genauen und flexiblen Charakterisierung der Struktur und Zusammensetzung einer zu untersuchenden Oberfläche. Diese Aufgabe wird durch ein Verfahren und eine Vorrichtung mit den in den unabhängigen Ansprüchen definierten Merkmalen gelöst. Bevorzugte Ausführungsformen sind Gegenstand der abhängigen Ansprüche. Insbesondere erreicht die Erfindung damit eine schnelle und effiziente Erfassung der Topographie und der spektralen Eigenschaften einer zu untersuchenden Oberfläche.

Somit bietet die Erfindung in einem Aspekt ein Verfahren zum Erfassen topographischer und ortsaufgelöster, spektraler Eigenschaften einer zu untersuchenden Oberfläche gemäß Anspruch 1.

Dabei umfasst das Verfahren ein Erzeugen eines (lateral strukturierten) Beleuchtungsmusters eines ersten Messlichts, wobei das erste Messlicht eine Vielzahl von Wellenlängen aufweist. Vorzugsweise ist das erste Messlicht zumindest teilweise spektral kontinuierlich, d.h. es enthält ein spektrales Band unterschiedlicher Wellenlängen. Besonders bevorzugt liegt die Vielzahl von Wellenlängen zumindest teilweise im sichtbaren Wellenlängenbereich (d.h. in einem Wellenlängenbereich zwischen etwa 380 nm und etwa 780 nm insbesondere zwischen etwa 460 nm und etwa 720 nm).

In einer bevorzugten Ausführungsform wird das Beleuchtungsmuster als ein Array von Fokuspunkten insbesondere in einer gemeinsamen Fokalebene (einer ersten Messlichteinrichtung) erzeugt. Dieses Array umfasst dabei vorzugsweise zumindest etwa 100, noch mehr bevorzugt zumindest etwa 200, weiter bevorzugt zumindest etwa 500, am meisten bevorzugt zumindest etwa 1000 Fokuspunkte. In einer bevorzugten Ausführungsform wird durch Anzahl an Fokuspunkten des Beleuchtungsmusters die Anzahl an gleichzeitig messbaren Punkten an der zu untersuchenden Oberfläche und damit die messbare Fläche und/oder die Ortsauflösung bestimmt. Vorzugsweise werden die Fokuspunkte durch ein Array von Mikrolinsen erzeugt.

Das erfindungsgemäße Verfahren umfasst ein Abbilden bzw. Projizieren des Beleuchtungsmusters des ersten Messlichts (entlang eines ersten Beleuchtungsstrahlengangs) auf die zu untersuchende Oberfläche mittels eines chromatischen Objektivs derart, dass das Beleuchtungsmuster für unterschiedliche Wellenlängen der Vielzahl von Wellenlängen des ersten Messlichts in unterschiedlichen Abständen vom chromatischen Objektiv (insbesondere in unterschiedlichen Fokalebenen des chromatischen Objektivs) scharf abgebildet wird. Als chromatisches Objektiv wird dabei insbesondere ein Objektiv bezeichnet, das eine chromatische Aberration insbesondere derart aufweist, dass eine Brennweite des Objektivs innerhalb eines Wellenlängenbereichs des ersten Messlichts, insbesondere i von etwa 460 nm bis etwa 720 nm zumindest teilweise um zumindest etwa 1%, vorzugsweise zumindest etwa 2%, weiter bevorzugt zumindest etwa 5%, noch mehr bevorzugt zumindest etwa 10%, am meisten bevorzugt zumindest etwa 20% variiert. In einer bevorzugten Ausführungsform variiert die Brennweite des chromatischen Objektivs innerhalb eines Wellenlängenbereichs von etwa 460 nm bis etwa 720 nm wellenlängenabhängig um zumindest etwa 1 mm, vorzugsweise um zumindest etwa 2 mm, weiter bevorzugt um zumindest etwa 5 mm, am meisten bevorzugt um zumindest etwa 10 mm. Je größer die chromatische Aberration des chromatischen Objektives ist, desto größer kann der Dynamikbereich des gleichzeitig erfassbaren Höhenprofils der Oberfläche sein.

Insbesondere soweit der Dynamikbereich für eine konkrete Oberfläche nicht ausreichen sollte, wird vorzugsweise die Lage der zu untersuchenden Oberfläche relativ zu den Fokalebenen des chromatischen Objektivs sukzessive verändert, um nacheinander für die gesamte Oberfläche eine scharfe Abbildung des Beleuchtungsmusters für zumindest eine der Vielzahl von Wellenlängen zu erreichen. Ein Höhenprofil der Oberfläche führt dazu, dass das Beleuchtungsmuster (unter Umständen) nicht auf der gesamten Oberfläche gleichzeitig für dieselbe Wellenlänge scharf abgebildet wird. Stattdessen, können bei einer bestimmten Lage (Abstand) der Oberfläche relativ zum chromatischen Objektiv an lateral unterschiedlichen Positionen unterschiedliche Wellenlängen scharf abgebildet werden.

Erfindungsgemäß wird das von der zu untersuchenden Oberfläche abgestrahlte (bzw. reflektierte) erste Messlicht mittels des chromatischen Objektivs auf eine Maske (im Folgenden auch Konfokalmaske bezeichnet) abgebildet bzw. projiziert. Dabei weist die Konfokalmaske ein zum Beleuchtungsmuster korrespondierendes Transmissionsmuster auf. Die "Korrespondenz" zwischen dem Beleuchtungsmuster und dem Transmissionsmuster bedeutet dabei, dass das auf der zu untersuchenden Oberfläche scharf abgebildete Beleuchtungsmuster die maximale Transmission durch die Maske aufweist. Insbesondere bei der Nutzung eines Arrays von Fokalpunkten des ersten Messlichts als Beleuchtungsmuster ist es vorteilhaft als Konfokalmaske eine Lochblende mit einem entsprechenden zweidimensionalen Array von Pinholes bereitzustellen, so dass insbesondere jedes Pinhole genau einem Fokalpunkt entspricht und/oder umgekehrt.

Das durch die Konfokalmaske transmittierte erste Messlicht wird anschließend spektral aufgespalten und mittels eines Detektors als 2-dimensionale Intensitätsverteilung ortsaufgelöst erfasst. Dabei ermöglicht die Ortsauflösung der Intensitätsverteilung einerseits eine Ortsauflösung unterschiedlicher Positionen auf der zu untersuchenden Oberfläche. Insbesondere entspricht jeder Fokalpunkt des Beleuchtungsmusters und/oder jedes Pinhole der Konfokalmaske einem Messpunkt an der zu untersuchenden Oberfläche. Andererseits ermöglicht die Ortsauflösung der Detektion der Intensitätsverteilung auch eine Auswertung einer Höheninformation an unterschiedlichen Positionen der zu untersuchenden Oberfläche. So wird für jeden Messpunkt der Oberfläche, insbesondere für jeden Fokalpunkt des Beleuchtungsmusters, genau diejenige Wellenlänge an der Konfokalmaske maximal transmittiert, für welche der wellenlängenabhängige Fokalpunkt des chromatischen Objektivs auf der zu untersuchenden Oberfläche liegt, also bei welcher der Fokalpunkt des Beleuchtungsmusters auf der Oberfläche scharf abgebildet wird. Die Höheninformationen der Oberfläche ist im transmittierten Licht somit spektral codiert. Durch die spektrale Aufspaltung des Lichts zu jedem Messpunkt wird die spektrale Information somit in eine Ortsinformation transformiert, die vom Detektor sehr einfach erfasst werden kann. Damit werden die topographischen Eigenschaften der zu untersuchenden Oberfläche anhand der mittels des Detektors erfassten Intensitätsverteilung des ersten Messlichts ermittelt.

Damit stehen zwar topografische Informationen, nicht aber ausreichend spektrale Informationen über die Oberfläche zur Verfügung. Dazu umfasst das erfindungsmäße Verfahren außerdem ein homogenes Beleuchten der zu untersuchenden Oberfläche mittels eines zweiten Messlichts, welches ebenfalls eine Vielzahl von Wellenlängen enthält. Vorzugsweise ist das zweite Messlicht zumindest teilweise spektral kontinuierlich, d.h. es enthält ein spektrales Band unterschiedlicher Wellenlängen. Besonders bevorzugt liegt die Vielzahl von Wellenlängen zumindest teilweise im sichtbaren Wellenlängenbereich (d.h. in einem Wellenlängenbereich zwischen etwa 380 nm und etwa 780 nm, besonders bevorzugt zumindest teilweise zwischen etwa 460 nm und etwa 720 nm).

Das "homogene" Beleuchten bedeutet in diesem Fall insbesondere, dass das zweite Messlicht anders als das erste Messlicht im Wesentlichen kein (laterales) Beleuchtungsmuster aufweist - zumindest kein zum Transmissionsmuster der Konfokalmaske korrespondierendes Beleuchtungsmuster. Besonders bevorzugt bedeutet "homogen" dabei, dass die laterale Verteilung der Intensitäten für unterschiedliche Wellenlängen des zweiten Messlichts im Wesentlichen nicht vom Abstand zum chromatischen Objektiv abhängt. "Im Wesentlichen" bedeutet in diesem Zusammenhang insbesondere, dass sich in einem Messbereich der zu untersuchenden Oberfläche die relative Intensitätsverteilung für unterschiedliche Wellenlängen die Vielzahl von Wellenlängen des zweiten Messlichts, auf der Oberfläche um nicht mehr als etwa 20%, vorzugsweise nicht mehr als etwa 10%, weiter bevorzugt nicht mehr als etwa 5%, noch weiter bevorzugt nicht mehr als etwa 2%, am meisten bevorzugt nicht mehr als etwa 1% voneinander unterscheidet. Davon unberührt sind die absoluten Intensitäten unterschiedlicher Wellenlängen, die sich durchaus voneinander unterscheiden können. Jedenfalls löst das zweite Messlicht durch dessen im Wesentlichen homogene Intensitätsverteilung die Konfokalbedingung auf.

Das von der zu untersuchenden Oberfläche abgestrahlte zweite Messlicht wird mittels des chromatischen Objektivs auf die Konfokalmaske abgebildet bzw. projiziert. Aufgrund der Aufhebung der Konfokalbedingung hängt die spektrale Zusammensetzung des abgestrahlten zweiten Messlichts im Wesentlichen nicht von der Topographie (zumindest im Wesentlichen nicht von der lokalen Höhe bzw. Abstand relativ zum Objektiv) der Oberfläche ab. Vielmehr werden alle im abgestrahlten zweiten Messlicht lokal enthaltenen Wellenlängen an der Konfokalmaske gleichermaßen transmittiert. Das lokale Spektrum des transmittierten Lichts spiegelt somit im Wesentlichen die lokalen spektralen Eigenschaften der Oberfläche wider. Um diese spektralen Eigenschaften zu ermitteln, umfasst das erfindungsgemäße Verfahren ein spektrales Aufspalten des durch die Konfokalmaske transmittierten zweiten Messlichts. Anschließend wird die 2-dimensionale Intensitätsverteilung des spektral aufgespaltenen zweiten Messlichts mittels des Detektors ortsaufgelöst erfasst. Dabei ermöglicht die Ortsauflösung der Intensitätsverteilung wiederum einerseits eine Ortsauflösung unterschiedlicher Positionen auf der zu untersuchenden Oberfläche. Andererseits ermöglicht die Ortsauflösung der Detektion der Intensitätsverteilung auch eine Auswertung der im transmittierten zweiten Messlicht enthaltenen, lokalen spektralen Eigenschaften für jeden Messpunkt der Oberfläche. Damit werden die ortsaufgelösten, spektralen Eigenschaften der zu untersuchenden Oberfläche anhand der mittels des Detektors erfassten Intensitätsverteilung des zweiten Messlichts ermittelt.

Das Messverfahren basiert somit auf einer Kombination eines konfokalen 3D-Messverfahrens mit einem Hyperspektral-Messverfahren, das beispielsweise mittels einer externen Lichtquelle umgesetzt werden kann. Vorzugsweise ist es aber auch möglich, für das erste und zweite Messlicht dieselbe Lichtquelle bzw. Lampe zu verwenden, das Licht aber nur für die Einstrahlung des ersten Messlichts entsprechend dem Beleuchtungsmuster zu strukturieren (z.B. durch Mikrolinsen). Auch ist es denkbar, für die hyperspektrale Messung entweder ein zweites, nicht hyperchromatisches Objektiv zu nutzen oder durch Ein- bzw. Ausschwenken eines optischen Elementes (beispielsweise eines diffraktiven Elements) zwischen hyper- und achromatischer Ausführung des Objektivs zu alternieren.

Die ermittelte Abstandsinformation aus der topographischen Erfassung kann auch genutzt werden, um die erfassten Spektren des zweiten Messlichts entsprechend zu gewichten und dadurch die laterale Auflösung der Hyperspektralmessung zu erhöhen.

Die Kombination aus multifokalem, konfokalem, chromatisch codiertem 3D-Messverfahren mit einem zusätzlichen, nichtkonfokalen zweiten Messlicht ermöglicht das Ermitteln von Topographie und spektralen Eigenschaften mit hoher und insbesondere gleicher, vor allem sogar korrelierter Ortsauflösung mit nur einem Messsystem bzw. einer Messvorrichtung. Es wird damit ein hyperspektrales Messverfahren zur Vermessung bzw. Erfassung der Oberflächenstruktur und -farbe eines Objektes bereitgestellt. Dadurch, dass eine Oberfläche entsprechend der vorliegenden Erfindung auf topographische und farbliche Eigenschaften mit nur einer Messvorrichtung charakterisiert werden kann, wird eine platz-, zeit- und kosteneffiziente Methode verwirklicht. Vor allem aber erlaubt das erfindungsgemäße Verfahren eine sehr genaue Auswertung insbesondere der lokalen spektralen Eigenschaften, da die ortsaufgelöste Information über die spektralen Eigenschaften sehr gut räumlich korreliert sind mit den Informationen über die Topographie. Insbesondere können damit lokale spektrale Informationen unter Berücksichtigung der Topographie sehr verlässlich interpretiert oder bewertet werden. Beispielsweise kann eine Abhängigkeit von spektral aufgelösten Intensitäten im zweiten Messlicht von lokalen Neigungen der Oberfläche anhand der ermittelten Topographie sehr genau berücksichtigt werden, was insbesondere die lokale Materialanalyse verbessert.

Ferner braucht der Benutzer nur eine Vorrichtung bedienen, die alle nötigen Funktionen zur Charakterisierung der genannten Eigenschaften umfasst, und dies erlaubt es dem Benutzer, schnell und effizient mit der Vorrichtung zu arbeiten und die gezielten Informationen zu erhalten. Es wird entsprechend die Mess- bzw. Erfassungsgeschwindigkeit erhöht. Dies ist insbesondere von Vorteil, wenn beispielsweise ein menschliches Gebiss (insbesondere zu nicht-diagnostischen und nicht-therapeutischen Zwecken) charakterisiert werden soll, da die betroffene Person, deren Gebiss charakterisiert werden soll, eine zeitsparende Charakterisierung als angenehmer wahrnehmen wird als ein umständliches und zeitaufwendiges Verfahren.

Ein weiterer Vorteil besteht darin, dass die Verarbeitung der Mittel für die genannte Charakterisierung effizient bezüglich der Kosten ist. Optische Elemente werden beispielsweise zur topographischen und zur farblichen Charakterisierung in nur einer Vorrichtung verarbeitet. Der Benutzer der Vorrichtung kann ferner dadurch Kosten einsparen, dass er nur eine Vorrichtung statt mehrerer Vorrichtungen anschaffen braucht. Diese synergetischen Effekte haben den Vorteil, platz-, zeit- und kosteneffizient zu sein. Es können somit auf eine effiziente Weise zusätzliche Informationen zur Charakterisierung von Oberflächen gewonnen werden. Beispielsweise, kann die Erfindung eine effiziente Technologie zur intraoralen Erfassung der Geometrie, sowie der farblichen Eigenschaften eines Gebisses darstellen.

Ferner erweist sich die erfindungsgemäße Messvorrichtung als robust gegenüber kleinen Bewegungen und Erschütterungen. Aus diesem Grund ist die Handhabung der Vorrichtung besonders unkompliziert und zuverlässig. Insbesondere, wenn beispielsweise die Struktur und Farbe eines menschlichen oder tierischen Gebisses vermessen und charakterisiert werden soll, ist eine derartige unkomplizierte zuverlässige Handhabung vorteilhaft, denn in der Regel erfolgt eine solche Vermessung nicht ohne Erschütterungen. Es werden dahingehend Bewegungsartefakte für beide Messaufgaben vermieden.

Aus den erfassten Daten lassen sich ferner Informationen über mögliche Materialunterschiede der Oberfläche ermitteln. So kann beispielsweise ein Unterschied zwischen einem Kunststoff und einem Metall, welche gemeinsam in jeweiligen Abschnitten die untersuchte Oberfläche darstellen, festgestellt werden. Im zahnmedizinischen Bereich kann beispielsweise auch festgestellt werden, ob eine Oberfläche einem Weichgewebe (z.B. Zahnfleisch) oder einer Zahnsubstanz (z.B. Zahnschmelz) zugeordnet werden muss. Dies ist insbesondere vorteilhaft für die Rekonstruktion von Gebisselementen bzw. für die Herstellung von (biomimetischen) Prothesen.

In einem weiteren Aspekt bietet die Erfindung somit eine Vorrichtung zum Erfassen topographischer und ortsaufgelöster, spektraler Eigenschaften einer zu untersuchenden Oberfläche gemäß Anspruch 10, umfassend:

- eine erste Messlichteinrichtung zum Erzeugen eines Beleuchtungsmusters eines ersten Messlichts mit einer Vielzahl von Wellenlängen;
- eine zweite Messlichteinrichtung zum homogenen Beleuchten der zu untersuchenden Oberfläche mittels eines zweiten Messlichts mit einer Vielzahl von Wellenlängen;
- eine Konfokalabbildungseinrichtung mit einem chromatischen Objektiv und einer Konfokalmaske, welche ein zum Beleuchtungsmuster der ersten Messlichteinrichtung korrespondierendes Transmissionsmuster aufweist, derart, dass die Konfokalabbildungseinrichtung ausgelegt ist zum

  -- Abbilden des Beleuchtungsmusters des ersten Messlichts auf die zu untersuchende Oberfläche mittels des chromatischen Objektivs derart, dass das Beleuchtungsmuster für unterschiedliche Wellenlängen der Vielzahl von Wellenlängen des ersten Messlichts in unterschiedlichen Abständen vom chromatischen Objektiv scharf abgebildet wird; und
  -- Abbilden des von der zu untersuchenden Oberfläche abgestrahlten ersten Messlichts mittels des chromatischen Objektivs auf die Konfokalmaske;

- eine Spektralaufspalteinrichtung zum spektralen Aufspalten des durch die Konfokalmaske transmittierten ersten und zweiten Messlichts;
- einen Detektor zum ortsaufgelösten Erfassen einer 2-dimensionalen Intensitätsverteilung des spektral aufgespaltenen ersten und zweiten Messlichts; und
- eine Auswerteeinrichtung zum Ermitteln der topographischen Eigenschaften der zu untersuchenden Oberfläche anhand der mittels des Detektors erfassten Intensitätsverteilung des ersten Messlichts und zum Ermitteln der ortsaufgelösten, spektralen Eigenschaften der zu untersuchenden Oberfläche anhand der mittels des Detektors erfassten Intensitätsverteilung des zweiten Messlichts.

Vorzugsweise umfasst das ortsaufgelöste Erfassen der 2-dimensionalen Intensitätsverteilung des spektral aufgespaltenen ersten und/oder zweiten Messlichts mittels des Detektors ein (scharfes) Abbilden des Transmissionsmusters der Konfokalmaske auf eine Sensorfläche des Detektors. Besonders bevorzugt erfolgt das Abbilden des Arrays von Pinholes der Konfokalmaske auf die Sensorfläche derart, dass die spektral aufgespaltenen Abbildungen benachbarter Pinholes auf der Sensorfläche innerhalb der Wellenlängen des ersten und/oder zweiten Messlichts nicht überlappen. Dadurch lassen sich die einzelnen Messpunkte der Oberfläche sehr verlässlich unabhängig voneinander sowohl in topographischer als auch in spektraler Hinsicht analysieren.

Vorzugsweise wird das zweite Messlicht unter einem anderen Winkel auf die zu untersuchende Oberfläche gestrahlt als das erste Messlicht. Besonders bevorzugt wird das erste Messlicht entlang der optischen Achse des chromatischen Objektivs (mittels des chromatischen Objektivs) im Wesentlichen senkrecht auf die Oberfläche projiziert (eingestrahlt), wohingegen das zweite Messlicht vorzugsweise unter einem anderen (flacheren) Winkel auf die Oberfläche projiziert (eingestrahlt) wird. Dazu umfasst vorzugsweise die zweite Messlichteinrichtung eine ringförmige Lichtquelle, die vorzugsweise symmetrisch um eine optische Achse des chromatischen Objektivs herum angeordnet ist. Eine optionale ringförmige Ausleuchtung der Oberfläche erweist sich als vorteilhaft hinsichtlich der Vermeidung von Schatten und inhomogener Beleuchtung. Es wird entsprechend eine homogene Ausleuchtung der Oberfläche erzielt. In einer weiteren bevorzugten Ausführungsform der Messvorrichtung kann die Hyperspektral-Lichteinstrahleinrichtung dazu ausgelegt sein, die zu untersuchende Oberfläche unter verschiedenen Winkeln mit dem Hyperspektral-Licht auszuleuchten. Eine optionale Ausleuchtung der Oberfläche unter verschiedenen Winkeln erweist sich ebenfalls als vorteilhaft hinsichtlich der Vermeidung von Schatten und inhomogener Beleuchtung. Die Winkel werden dabei durch die Einfallsachse des Hyperspektral-Lichts und die optische Achse des Objektivs gebildet. Es wird entsprechend auch in diesem Fall eine homogene Ausleuchtung der Oberfläche erzielt. Außerdem lässt sich damit bereits begünstigen, dass für das erste Messlicht spekulare Reflexe erfasst werden können, während für das zweite Messlicht insbesondere Streulicht erfasst wird. Um dies weiter zu begünstigen umfasst die erfindungsgemäße Messvorrichtung in einer bevorzugten Ausführungsform des Weiteren eine Polarisationseinrichtung (z.B. mit mindestens einer Polarisationsoptik und/oder einer $\lambda/4$-Optik) zur Reduktion des Anteils von an der zu untersuchenden Oberfläche reflektiertem zweiten Messlicht in dem mittels des Detektors erfassten zweiten Messlicht. Eine optionale Polarisationsoptik und/oder eine $\lambda/4$ Optik erlaubt es, ungewollte Reflexe an der Oberfläche, insbesondere Fresnel-Reflexe des Hyperspektral-Lichtes zu unterdrücken. Es wird im Idealfall durch die optimierte Polarisationsgeometrie des Strahls lediglich Hyperspektral-Licht an der Oberfläche gestreut, ohne dass Fresnel-Reflexe dabei erzeugt werden.

Vorzugsweise erfolgen das Abbilden des Beleuchtungsmusters des ersten Messlichts auf die zu untersuchende Oberfläche und das homogene Beleuchten der zu untersuchenden Oberfläche mittels des zweiten Messlichts nacheinander. Vorzugsweise wird eine Lage der zu untersuchenden Oberfläche relativ zu den Fokalebenen des chromatischen Objektivs verändert und das ortsaufgelöste Erfassen der 2-dimensionalen Intensitätsverteilung des spektral aufgespaltenen ersten und/oder zweiten Messlichts mittels des Detektors wird für unterschiedliche Lagen der zu untersuchenden Oberfläche wiederholt. Während das Wiederholen des ortsaufgelösten Erfassens der 2-dimensionalen Intensitätsverteilung im Falle des ersten Messlicht besonders dann zum Einsatz kommt, wenn dadurch der Dynamikbereich für das zu untersuchende Höhenprofil erweitert werden soll, dient die Wiederholung der Messung für eine Positionierung der Oberfläche in unterschiedlichen Fokalebenen des chromatischen Objektiv im Falles des zweiten Messlicht insbesondere der Erhöhung der lateralen Auflösung für die Untersuchung von spektralen Eigenschaften (z.B. der Ermittlung einer Materialgrenze).

In einer weiteren bevorzugten Ausführungsform der Messvorrichtung kann die Messvorrichtung des Weiteren eine Kollimationsoptik zur Kollimation von Hyperspektral-Licht (zweites Messlicht) umfassen. Eine optionale Kollimationsoptik führt dazu, dass kollimiertes Licht erzeugt wird, welches sich durch weitgehend parallele (nicht-divergente bzw. nicht-konvergente) Strahlen auszeichnet. Durch ein paralleles Strahlenbündel kann die Oberfläche ebenfalls besonders homogen und gleichmäßig ausgeleuchtet werden. Es wird entsprechend auch in diesem Fall eine homogene Ausleuchtung der Oberfläche erzielt.

In einer weiteren bevorzugten Ausführungsform der Messvorrichtung kann die Messvorrichtung des Weiteren eine Wellenleiteroptik umfassen. Eine optionale Wellenleiteroptik, die zumindest teilweise in den Strahlengang implementiert wird, kann dazu dienen, die Vorrichtung noch platzsparender zu gestalten, denn es könnte beispielsweise auf umlenkende Optiken, wie Spiegel verzichtet werden, indem der Strahlengang entlang des Lichtleiters quasi um eine oder mehrere Ecken geleitet wird.

Eine erfindungsgemäße Vorrichtung ist besonders flexibel und mobil und kann vorteilhaft für den vielfältigen Einsatz an vielfältigen Orten sein. Beispielsweise könnte eine derartige Vorrichtung zum einen an einer archäologischen Ausgrabungsstätte zur Charakterisierung von Oberflächen von Artefakten dienen, zum anderen könnte derselbe Vorrichtung auch an einem anderen Ort, wie beispielsweise einem Biotop, zur Charakterisierung von Oberflächen von Pflanzen und/oder Tieren dienen. Insbesondere die Charakterisierung von Oberflächen in vivo, also in lebenden Organismen und möglicherweise in deren natürlichen Umgebungen, kann dadurch ermöglicht werden. Es ist dadurch auch möglich Oberflächen von sehr empfindlichen Objekten, wie beispielsweise Eis, Schnee, Pulver usw. zu charakterisieren.

Ferner umfasst die Erfindung eine Verwendung der erfindungsgemäßen Vorrichtung, insbesondere in einer der hier beschriebenen bevorzugten Ausführungsformen zur Durchführung eines erfindungsgemäßen Verfahrens, insbesondere gemäß einer der hier beschriebenen bevorzugten Ausführungsformen.

In einer bevorzugten Form der Verwendung kann die Oberfläche, die Oberfläche bzw. ein Abschnitt der Oberfläche eines Werkstoffs, eines biologischen, organischen, anorganischen oder synthetischen Materials, eines Pulvers, einer Beschichtung, eines historischen Artefaktes oder eines Kunstobjektes umfassen. Bei der optionalen Verwendung im Zusammenhang mit den genannten Oberflächen können die zuvor genannten entsprechenden Vorteile im Bereich der Werkstoffkunde, der Biologie, der Chemie, der Materialwissenschaften, der Geschichte und Kunsthistorik bzw. Kunst genutzt werden. Beispielsweise kann die Oberflächenstruktur und Farbe eines Ölgemäldes zur Digitalisierung erfasst und gespeichert werden.

Es ist ferner möglich, dass sich die Verwendung einer einzigen Vorrichtung auch auf verschiedene Bereiche bezieht, wie dies der Fall wäre, wenn mehrere universitäre Fakultäten aus synergetischen Gründen gemeinsam eine derartige Vorrichtung für eine fächerübergreifende Verwendung anschaffen würden. Auch die Eigenschaft des Messsystems, semitransparente oder streuende Probenoberflächen problemlos erfassen zu können, eignet sich insbesondere für die genannten Bereiche und besonders für medizinische Anwendungen.

In einer bevorzugten Ausführungsform einer insbesondere nicht-diagnostischen und nicht-therapeutischen Verwendung kann die Oberfläche, eine Oberfläche bzw. ein Abschnitt der Oberfläche eines Zahnes, von Teilen eines menschlichen oder tierischen Ohrs, oder einer Prothese umfassen. Bei der optionalen Verwendung im Zusammenhang mit den genannten Oberflächen können die zuvor genannten entsprechenden Vorteile auch im Bereich der Medizin, insbesondere in den Fachgebieten der HNO, Orthopädie, Zahnmedizin und Stomatologie, Prothesentechnik, Ophthalmologie, Dermatologie, Rechtsmedizin und der Kosmetik genutzt werden. Beispielsweise kann die Vorrichtung gemäß einem oder mehreren Aspekten einen Intraoralscanner für eine Hyperspektralanalyse zur Farbbestimmung eines Zahnes und zur Gewebedifferenzierung darstellen.

Diese Vorrichtung kann die physische Abformung durch den Zahnarzt ersetzen und einen berührungslosen Zahnabdruck in digitaler Form erstellen. Ferner ermöglicht die Vorrichtung eine möglichst exakte Erfassung der Gegebenheiten im Mundraum als Grundlage für die Herstellung der Restauration. Neben der Erfassung der 3D-Topographie, kann insbesondere die Grenze zwischen Zahnhartsubstanz und Gingiva eindeutig festgelegt werden, um die Präparationsgrenze besser erkennen und festlegen zu können.

Eine Spektralanalyse der Oberfläche, welche durch die genannte die Vorrichtung ermöglicht wird, kann direkt eine Echtfarbendarstellung der Oberfläche liefern und damit auch eine eindeutige und einfache Differenzierung zwischen Gingiva und Zahnhartsubstanz. Die Echtfarbendarstellung wäre ein Vorteil für den Zahntechniker oder den Zahnarzt, da er eine zu fertigende zahnärztliche Restauration den Farben der benachbarten Zähne anpassen muss und/oder auf dieser Basis ein farbgetreues künstliches Gebiss rekonstruieren kann. Eine zusätzliche Sitzung beim Zahntechniker zur Farbermittlung kann damit entfallen und somit die Prozesskette für die Kronenanfertigung verkürzen, was eine wesentliche Patientenerleichterung und auch Kostenminimierung darstellt.

Die einzelnen erfassten Datenpunkte oder Punktewolken können ferner mit einem speziell entwickelten Algorithmus zu einer Gesamttopographie zusammengesetzt werden. Dadurch ergibt sich während des handgeführten Messvorgangs eine besonders gute Robustheit gegenüber Bewegungsartefakten. Dies ist bei Messungen an einem Menschen oder irgendeinem lebenden Organismus von besonderem Vorteil, da Bewegungen der Person oder des Organismus nicht ausgeschlossen werden können.

Die genannten bevorzugten Ausführungsformen bzw. Aspekte der bevorzugten Ausführungsformen können beliebig kombiniert werden, sofern sie in einer entsprechenden Kombination technisch durchführbar sind und sich nicht gegenseitig ausschließen.

Weitere Merkmale, Vorteile und Funktionen werden nachfolgend anhand besonderer Ausführungsformen detailliert beschrieben. Obwohl einzelne Ausführungsformen gesondert beschrieben sind, können einzelne Merkmale hiervon zu weiteren Ausführungsformen kombiniert werden.

**Fig. 1**   zeigt zwei schematische Darstellungen einer chromatisch codierten, konfokalen Messvorrichtung jeweils mit Fokussierungen auf zwei unterschiedliche Messebenen.

**Fig. 2**   zeigt schematisch die Messvorrichtung zur Detektion von multiplen Messpunkten auf Basis einer chromatisch codierten, konfokalen Abstandsmessung.

**Fig. 3**   zeigt eine beispielhafte Aufnahme einer Oberfläche unter Verwendung einer chromatisch codierten, konfokalen Messvorrichtung.

**Fig. 4**   ist eine schematische Darstellung einer hyperspektralen chromatisch codierten, konfokalen Messvorrichtung.

**Fig. 5**   ist eine schematische Darstellung des Strahlengangs zum lateralen Auflösungsvermögen in den verschiedenen axialen Messebenen sowie der einzelnen Wellenlängen.

**Fig. 6**   ist eine schematische Darstellung des Strahlengangs zur Verschiebung der einzelnen wellenlängenabhängigen Messareale bei lateralem Versatz in der Mitte des axialen Messbereichs zueinander.

**Fig. 7**   ist die Darstellung in einem Diagramm von Intensitätsverteilungen der Pinhole-Abbildung in der jeweiligen Abbildungsebene von fünf gleichmäßig im Messbereich verteilten Wellenlängen.

**Fig. 8**   zeigt in einem Diagramm den maximalen messfeldseitigen Durchmesser der Fläche, aus der ein Signal bei der Hyperspektralmessung in ihren Abbildungsebenen erfasst wird.

**Fig. 9**   zeigt in einem Diagramm den simulierten Verlauf der lateralen Auflösung im oberen Rand des Messbereichs bei Wellenlängen von 535 nm, 540 nm und 545 nm.

**Fig. 10** zeigt links in einem Diagramm die Numerische Apertur des topographischen Messsystems, welche sich aus dem chromatischen Shift ergibt, aufgetragen über den Wellenlängenbereich des Systems und rechts die axiale chromatische Aberration des Messsystems, wobei der Abstand der Abbildungsebene über der zugehörigen Wellenlänge aufgetragen ist.

**Fig. 11** zeigt in einem Diagramm den simulierten Verlauf der lateralen Auflösung in den Messebenen bei Wellenlängen von 535 nm, 540 nm und 545 nm.

**Fig. 12** zeigt in einem Diagramm den simulierten Verlauf der lateralen Auflösung im unteren Messbereich bei Wellenlängen von 710 nm, 715 nm und 720 nm.

**Fig. 13** zeigt in einem Diagramm Größe und Position der wellenlängenabhängigen Pinhole-Abbildungen in drei verschiedenen axialen und zwei verschiedenen lateralen Messpositionen.

**Fig. 14** ist die schematische Darstellung einer Vorrichtung, welcher eine hyperspektrale chromatisch codierte, konfokale Messvorrichtung umfasst.

Einige Figuren enthalten eingezeichnete Achsen mit Richtungen, die durch Pfeile und Bezugszeichen x, y, z gekennzeichnet sind. Diese Achsen dienen zur Richtungsdefinition, beziehen sich jeweils auf die dargestellten Gegenstände und sind individuell und unabhängig für jede Figur zu verstehen.

Im Folgenden wird die Technologie einer konfokalen Abstandsmessung im Hinblick auf deren erfindungsgemäße Anwendung und Weiterentwicklung beschrieben.

Für die Bestimmung einer Oberflächentopographie sind auf vielen Gebieten der Technik und Medizin innovative Messverfahren erforderlich, die die Oberfläche exakt und umfassend erfassen, ohne diese zu berühren oder gar zu beschädigen. Hierzu eignen sich im Besonderen optische Messverfahren, wie beispielsweise die Weißlichtinterferometrie, das Streifenprojektionsverfahren, die Konfokalmesstechnik oder die Lasertriangulation.

Bei einem konfokalen Messprinzip, wie es sich auch die vorliegende Erfindung in bevorzugten Ausführungen zunutze macht, wird beispielsweise ein Pinhole bzw. eine Lochblende (ein Loch in einer Blende, wobei das Loch vorzugsweise eine Größe im mm- oder pm-Bereich hat) des Beleuchtungsstrahlengangs auf die Probe und, über das remittierte Licht, konfokal in ein Pinhole im Detektionsstrahlengang abgebildet. Durch einen axialen Scan (entlang der z-Achse) einer beleuchteten Oberfläche oder Grenzfläche kann über den Anstieg der Lichtmenge, die durch das Pinhole auf den Detektor fällt, festgestellt werden, wann sich die Oberfläche in der Abbildungsebene befindet. Somit ist die xyz-Koordinate eines Punktes auf der Oberfläche bekannt. Durch einen lateralen Scan kann somit die Topographie der Oberfläche ermittelt werden.

Die konfokale Abstandmessung erweist sich als robust gegenüber Oberflächeneigenschaften. Auch semitransparente oder volumenstreuende Medien können vermessen werden. Zudem kann aufgrund des koaxialen Beleuchtungs- und Detektionsstrahlenganges in tiefen Einschnitten (z.B. Zahnzwischenräumen oder Bohrungen) und steilen Flanken gemessen werden.

Bei der chromatisch codierten Konfokalmesstechnik, wie sie sich auch die vorliegende Erfindung in bevorzugten Ausführungen zunutze macht, wird beispielsweise ein Pinhole bzw. eine Lochblende durch die Beleuchtung beispielsweise mit einer Weißlichtquelle (also jedenfalls mit Licht unterschiedlicher Wellenlängen) über ein Objektiv mit starker chromatischer Aberration in die Messebene abgebildet. Durch die chromatische Aberration ist die Lage der Abbildungsebene des Pinholes wellenlängenabhängig, wodurch nicht nur eine Messebene, sondern ein spektral abhängiger axialer Messbereich entsteht.

Im Folgenden wird näher auf die chromatisch codierte Konfokalmesstechnik eingegangen. Da die Erfindung darauf basiert, eine zusätzliche Lichtquelle mit dem bestehenden chromatisch codierten konfokalen Messprinzip (mit simultaner Erfassung multipler Messpunkte in einem dreidimensionalen Raum) zu kombinieren, sind jegliche im Folgenden genannten Merkmale, Vorteile und Funktionen der chromatisch codierten Messvorrichtung zur Erfassung einer Oberflächentopographie mit der erfindungsgemäßen Technologie kombinierbar bzw. vereinbar.

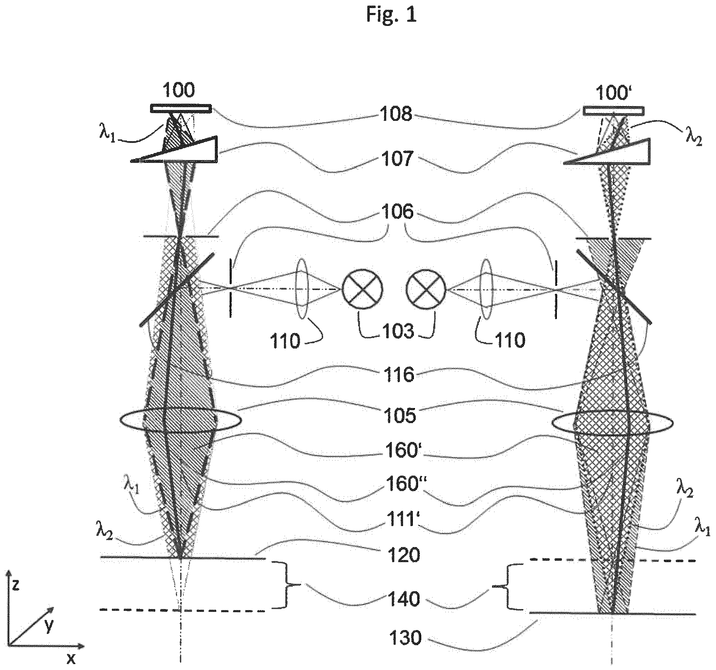

**Fig. 1** zeigt Details einer nicht unter den Gegenstand der Ansprüche fallenden Messvorrichtung 100, die auch in bevorzugten Ausführungsformen der vorliegenden Erfindung Anwendung finden können. Die Messvorrichtung 100 umfasst eine Lichtquelle 103 (insbesondere eine Weißlichtquelle) zur Abstrahlung von Licht (hier auch als "Konfokal-Licht" oder "erstes Messlicht" bezeichnet) in einen Konfokalstrahlengang 160' und eine Linse 110 zur Fokussierung des Konfokal-Lichtes auf die Öffnung einer Lochblende oder eines Pinholes 106 in dem Konfokalstrahlengang 160'. Ferner umfasst die Vorrichtung 100 einen Strahlteiler 116, der das Licht, welches durch die Öffnung des Pinholes 106 gelangt ist, auf ein Objektiv 105 mit chromatischer Aberration (hier auch als "chromatisches Objektiv" bezeichnet) umlenkt. Das Objektiv 105 fokussiert wegen der chromatischen Aberration unterschiedliche Wellenlängen $\lambda_1$, $\lambda_2$, $\lambda_3$ in unterschiedlichen Ebenen 120, 140 in einem gewissen Bereich 140 auf eine Oberfläche. Dabei wird ein Bild des Pinholes in einem Punkt auf der Oberfläche abgebildet - für jede Wellenlänge $\lambda_1$, $\lambda_2$, $\lambda_3$ in einer anderen Ebene 120, 140 in einem gewissen Bereich 140. Das Licht, welches von der Oberfläche zurückgestreut wird und dabei die konfokale Bedingung erfüllt, verläuft entlang eines Detektionsstrahlenganges 160" zurück über das Objektiv 105 und passiert danach den Strahlteiler 116 derart, dass es ein Spektrometer bzw. ein Prisma bzw. eine spektraldispersive Einheit 107 der Vorrichtung 100 erreicht, wo es nach Wellenlängen $\lambda_1$, $\lambda_2$, $\lambda_3$ örtlich aufgefächert wird. Ein Detektor bzw. eine CCD (ladungsgekoppeltes Bauteil) Kamera 108 der Vorrichtung 100 erfasst im Anschluss die spektralen Eigenschaften des Lichtes.

Die linke Vorrichtung 100 bildet das Pinhole 106 in der (oberen) proximalen Messebene 120 mit der blauen Wellenlänge $\lambda_1$ und die rechte Vorrichtung 100 bildet das Pinhole 106 in der (unteren) distalen Messebene 130 mit der roten Wellenlänge $\lambda_2$ scharf ab. Zwischen den proximalen Messebenen 120, 130 für die Foki im blauen $\lambda_1$ und roten $\lambda_2$ Bereich (axialer Messbereich) 140 befinden sich die scharfen Pinholeabbildungen der anderen Wellenlängen $\lambda_3$, die zwischen dem blauen $\lambda_1$ und dem roten $\lambda_2$ Bereich liegen.

Befindet sich im Messbereich eine Probe, so wird das Licht an der Oberfläche reflektiert. Das remittierte Licht fällt über ein Objektiv 105 mit der chromatischen Aberration auf das Pinhole 106 im Detektionsstrahlengang160". Vornehmlich nur Licht derjenigen Wellenlänge, für die die konfokale Bedingung erfüllt ist, kann durch das Pinhole 106 im Detektionsstrahlengang160' hindurchgelangen. Hierbei fungiert das Pinhole 106 im Detektionsstrahlengang160' als effizienter Filter, der das Licht der unscharfen Abbildungen der anderen Wellenlängen blockiert. Durch Bestimmung der Wellenlänge mittels eines Spektrometers bzw. einer spektraldispersiven Einheit 107 kann letztendlich die z-Koordinate der Oberfläche bestimmt werden.

Der Vorteil bei der chromatisch codierten, konfokalen Abstandsmessung besteht darin, dass durch den chromatischen Fehler des Objektivs 105 ein Messbereich 140 entlang der optischen Achse 111 des Objektivs 105 vorhanden ist. Dadurch entfällt gegenüber der einfachen konfokalen Abstandsmessung die Nachfokussierung der Probe oder des Objektivs. Da es sich bei dem beschriebenen optischen Verfahren um eine Einzelpunktmessung handelt, muss für die Erfassung einer Fläche der Messpunkt über die Probe gescannt werden.

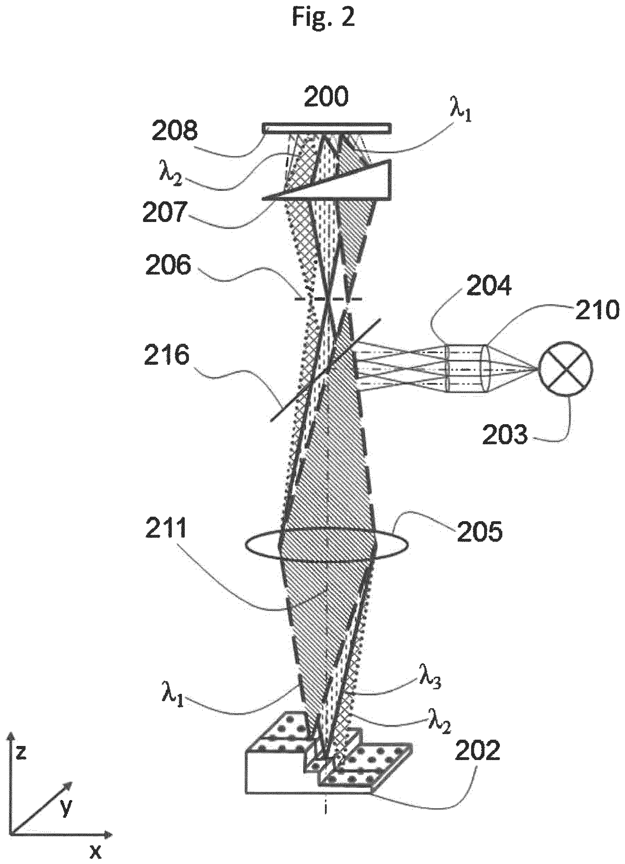

Die Methode zur Oberflächencharakterisierung entsprechend der Vorrichtung 100 der **Fig. 1** basiert in anderen Worten darauf, dass der Fokus des blauen Lichts $\lambda_1$ näher am Objektiv und der Fokus des roten Lichts $\lambda_2$ weiter vom Objektiv 105 entfernt liegen. Die konfokale Anordnung bewirkt, dass nur jener Spektralanteil des remittierten Lichts durch das Pinhole 106 vor dem Detektor 108 gelangt, der seinen Fokuspunkt auf der Probenoberfläche hat. In einer Spektrometeranordnung 100 wird das Pinhole 106 über ein dispersives Prisma 107 als Spektrallinie auf den Kamerachip 108 abgebildet. Über eine Bestimmung der Peaklage im Spektrum kann letztendlich der Abstand des Messpunktes in der jeweiligen Messebene 120, 130 zum Objektiv 105 rekonstruiert werden. Durch eine parallele, multifokale Abstandsmessung in beispielsweise ca. 1200 Messpunkten kann dann die Topographie eines Messobjektes erfasst werden. Zur Verkürzung der Messdauer kann demnach statt einem einzelnen Punkt eine Mehrzahl von Punkten auf einer Probe erfasst werden indem eine Mehrzahl von Pinhole-Offnungen auf die Probenoberfläche abgebildet werden. Eine solche, ebenfalls nicht unter den Gegenstand der Ansprüche fallende Vorrichtung 200 (eine multifokale, konfokale, chromatisch codierte Messvorrichtung) ist in **Fig. 2** schematisch dargestellt. Auch diese Vorrichtung 200 umfasst, wie die Vorrichtung 100 in **Fig. 1**, eine Lichtquelle 203, eine Linse 210, ein Objektiv 205 mit chromatischer Aberration, einen Strahlteiler 216, ein Spektrometer 207, sowie eine CCD Kamera 208.

Ferner umfasst die Vorrichtung statt eines Pinholes im Konfokal-Strahlengang eine Einrichtung zur Erzeugung eines multifokalen Beleuchtungsmusters bzw. ein Mikrolinsen-Array 204 und statt eines Pinholes im Detektions-Strahlengang umfasst die Einrichtung 200 ein zweidimensionales Pinhole-Feld/array bzw. Lochblendenfeld bzw. Lochmuster 206. Die Einrichtung zur Erzeugung eines multifokalen Beleuchtungsmusters 204 muss nicht zwingend ein Mikrolinsen-Array 204 sein. Eine solche Einrichtung 204 kann auch rein reflektive Elemente oder andere fokussierende Elemente anstelle von Mikrolinsen umfassen. Bei einem Mikrolinsen-Array 204 werden beispielsweise mehrere Mikrolinsen in einer zweidimensionalen Ebene angeordnet, sodass wenn ein Licht darauf fällt, ein multifokales Beleuchtungsmuster entsteht. Ein zweidimensionales Pinhole-Feld 206 umfasst eine Mehrzahl von Pinholes in einem Muster in eine Blende implementiert. So könnte ein zweidimensionales Pinhole-Feld eine Metallplatte sein, welche eine Mehrzahl von Löchern umfasst. Unter Verwendung des zweidimensionalen Mikrolinsen-Arrays 204 werden die Foki von bis zu 1244 Mikrolinsen durch Weißlicht einer Lichtquelle mit einem Objektiv 205 mit (starker) chromatischer Aberration telezentrisch in den Raum abgebildet, wodurch ein dreidimensionaler Messbereich entsteht. Befindet sich ein Objekt 202' in dem Strahlengang unter dem Objektiv 205, so wird ein Bild von dem zweidimensionalen Muster des Mikrolinsen-Arrays 204 auf der Oberfläche 202 des Objektes 202' abgebildet.

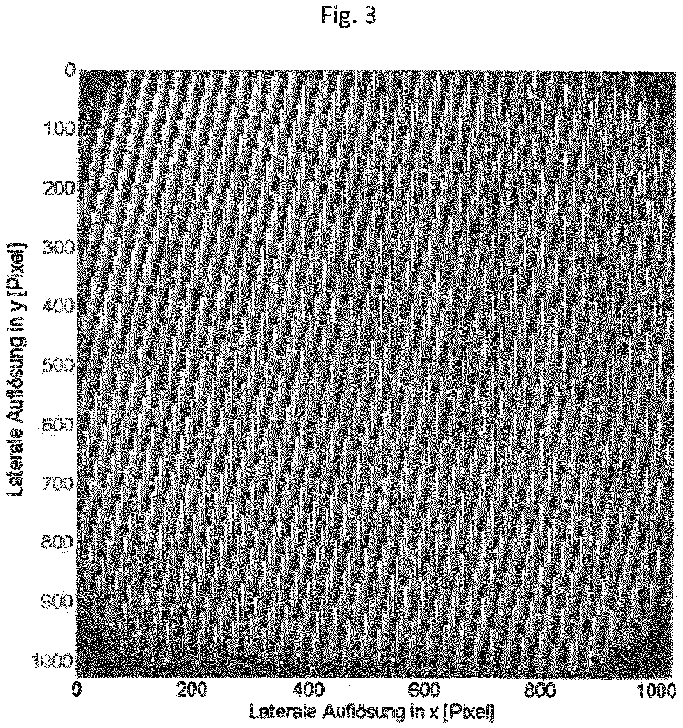

Durch die telezentrische Auslegung des Systems bleibt der Abbildungsmaßstab entlang der optischen Achse 211 gleich. Wie in **Fig. 2** dargestellt ist, werden die Foki auf einer dreidimensionalen Probenoberfläche 202 durch dasselbe Objektiv 205 in ein zweidimensionales Pinholearray 206 abgebildet. In der Spektrometereinheit werden die Spektren für jeden Messpunkt gleichzeitig auf einem CCD-Chip der CCD Kamera 208 abgebildet. Ein solches Spektrum, wie es möglicherweise auf einem CCD Chip abgebildet wird, ist in **Fig. 3** dargestellt. Dabei bildet jedes abgebildete Spektrum einen zu messenden Bereich bzw. ROI (Region of Interest: ROI), in dem die Peakwellenlänge und somit der Abstand ermittelt wird. In jedem ROI wird gleichzeitig der Signaluntergrund ermittelt und vom Messsignal abgezogen.

Dies wird realisiert durch die Anordnung eines weiteren Pinholes in unmittelbarer Nähe zu dem Pinhole, mit dem die Konfokalbedingung zum Fokuspunkt der Mikrolinse erfüllt ist.

Im Folgenden wird eine beispielhafte Ausführungsform der multifokalen, konfokalen, chromatisch codierten Messvorrichtung 200 näher beschrieben. In dieser Messvorrichtung ist über den axialen chromatischen Shift des Objektivs 205 das Messsystem 200 so ausgelegt, dass eine Messtiefe von 12,5 mm vorhanden ist. Objektseitig weist in diesem Beispiel das Objektiv 205 eine Numerische Apertur von 0,075 auf. Durch das Mikrolinsenarray 204 mit ca. 1244 Mikrolinsen entsteht ein lateraler Messbereich von 11 mm * 11 mm. Die Mikrolinsen sind dabei trigonal in einer Ebene zueinander mit einem Abstand von 175 μm angeordnet. Durch diesen Abstand ergibt sich auf der Probe bei einem Abbildungsmaßstab des Objektivs 205 von 1:2, ein lateraler Messpunkteabstand von 350 μm. Durch die Größe der Foki der Mikrolinsen und der Pinholedurchmesser ergibt sich ein Messspotdurchmesser von 25 μm auf der Probe 202'. Dies entspricht in etwa der lateralen Auflösungsgrenze des Messsystems 200. Die axiale Auflösung ergibt sich aus der Spaltbreite des Spektrometers 207, was dem Durchmesser des Pinholes in Korrelation mit der Pixelgröße bzw. -anzahl des CCD-Chips der CCD Kamera 208 entspricht. Dabei kann eine axiale Auflösung von 24 μm erreicht werden. Mit dieser Auslegung des Messsystems 200 erhält man durchschnittlich 1100 gültige Messpunkte pro Einzelbild. Dies entspricht einer 1100-fach höheren Messgeschwindigkeit gegenüber einer Einzelpunktmessung, die etwa mit einer konfokalen Messvorrichtung, wie in **Fig. 1** gezeigt, erreicht wird. Bei der maximalen Belichtungszeit des Systems von 33 ms werden ca. 33000 Messpunkte in einer Sekunde erfasst.

Im Folgenden wird eine beispielhafte Ausführungsform der multifokalen, konfokalen, chromatisch codierten Messvorrichtung 200, implementiert in einen Intraoralscanner (Intraoralscanner nicht in Figur gezeigt), näher beschrieben. Der Messbereich liegt in einem Abstand von 2,1 mm - 14,6 mm von der letzten optischen Fläche des Intraoralscanners entfernt - dies ist der Abstand zwischen der oberen (Fokus des blauen Lichts) bzw. der unteren Messebene (Fokus des roten Lichts) und einem Abschnitt der Messvorrichtung 200, aus dem der konvergente Strahl hinter dem Objektiv 205 heraustritt. Wird das Spektrometer bzw. das Prisma 207 an der Spitze der Vorrichtung 200, welche für die Verwendung als Intraoralscanner notwendig ist, entfernt, so verlängert sich der Arbeitsabstand von der letzten optisch aktiven Fläche (obere Messebene) auf 42 mm - 55 mm. Aufgrund der koaxialen Anordnung kann bei der Vorrichtung ein Aspektverhältnis von etwa 1/10 erreicht werden, weshalb es sich für die Messung an steilen Flanken und tiefen Einschnitten besonders eignet.

Die von der Vorrichtung 200, welche in einem handgehaltenen Intraoralscanner implementiert ist, erfassten Punktewolken pro Einzelbild werden über eine speziell entwickelte Software zu einer Topographie zusammengesetzt. Der Algorithmus der Software orientiert sich dabei an eindeutigen Strukturen, welche in jeder Punktewolke vorhanden sein müssen. Bei rotationssymmetrischen Strukturen, zum Beispiel, ist die Software daher nicht mehr in der Lage die einzelnen Punktewolken zusammenzusetzen. Durch händisches Verfahren des Scanners wird die gewünschte Messpunktedichte erreicht. Durch die Auslegung des optischen Messsystems 200 in Korrelation mit der Software können auf einem einzelnen humanen Zahn Messgenauigkeiten der virtuellen Abformung in einer Standardabweichung von 26 μm erreicht werden. Bei einem Scan einer Zahnreihe mit 3 Zähnen vergrößert sich die Standardabweichung in Abhängigkeit von den geometrischen Bedingungen auf 40 μm bis 55 μm. Die Vorrichtung kann problemlos Materialien wie Kunststoff, Metalle oder Holz, scannen. Auch biologische Materialien wie z.B. Zähne, Haut oder Muskelgewebe, können ohne Schwierigkeiten erfasst werden.

Insbesondere im Hinblick auf die Erfassung einer Gebisssituation erweist sich die Vorrichtung 200 als vorteilhaft, da sie es erlaubt berührungsfrei, präzise, schnell, in real-time und ohne Zuhilfenahme von Zusatzstoffen zu verfahren. Zudem zeichnet sich die Vorrichtung 200 durch eine hohe Messgenauigkeit, eine hohe Reproduzierbarkeit sowie ein großes Aspektverhältnis aus.

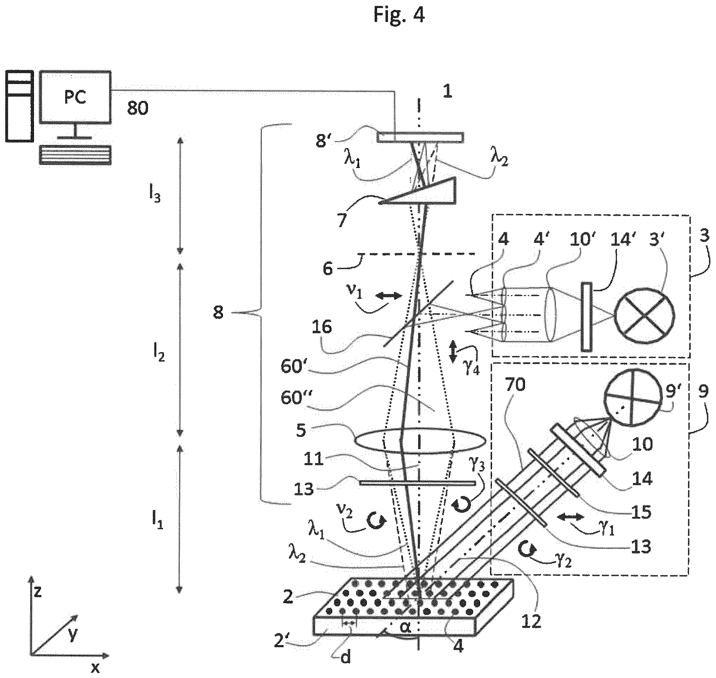

Im Folgenden wird eine Weiterentwicklung gemäß einer bevorzugten Ausführungsform der vorliegenden Erfindung im Hinblick auf eine Messvorrichtung 1 zum Erfassen topographischer und spektraler Eigenschaften einer Oberfläche 2 anhand der **Fig. 4** näher beschrieben.

In dieser Messvorrichtung 1 handelt es sich um eine Erweiterung des oben beschriebenen 3D-Messsystems 200 um eine hyperspektrale Messeinheit. In anderen Worten wurde für die Vorrichtung 1 ein bestehendes chromatisch codiertes, konfokales, multifokales Messsystem zur zusätzlichen Spektralanalyse erweitert. Eine bestehende chromatisch codierte, konfokale, multifokale 3D-Messvorrichtung, wie beispielhaft in **Fig. 2** dargestellt, ist also von einer chromatisch codierten, konfokalen, multifokalen, hyperspektralen 3D-Messvorrichtung, wie beispielhaft in **Fig. 4** dargestellt, umfasst. Es erklärt sich entsprechend von selbst, dass die Elemente der Konfokal-Messvorrichtung 200 aus **Fig. 2** den entsprechenden Elementen der hyperspektralen Konfokal-Messvorrichtung 1 aus **Fig. 4** entsprechen (Lichtquelle 3', Einrichtung zur Erzeugung eines multifokalen Beleuchtungsmusters 4', Objektiv 5, Lochmuster bzw. 2D Pinholearray 6, spektraldispersive Einrichtung 7, Detektor 8', der vorzugsweise eine CCD Kamera ist und Kollimationsoptik 10).

Die in **Fig. 4** schematisch dargestellte Messvorrichtung 1 kann beispielsweise einen Intraoralscanner darstellen. Dennoch beschränkt sich die Darstellung dieser Messvorrichtung 1 nicht auf diesen Bereich der Anwendung.

Die in der **Fig. 4** dargestellte Ausführungsform einer chromatisch codierten, konfokalen, multifokalen, hyperspektralen 3D-Messvorrichtung ist beispielhaft zu verstehen und beinhaltet optionale Merkmale, die den Umfang der Erfindung nicht einschränken sollen. Beispielsweise werden zwei Lichtquellen 3', 9' dargestellt, was jedoch nicht den Fall ausschließt, dass eine einzige Lichtquelle, deren Licht geteilt wird, stattdessen verwendet werden kann.

Die chromatisch codierte, konfokale, multifokale, hyperspektrale 3D-Messvorrichtung 1 zum Erfassen topographischer und spektraler Eigenschaften einer Oberfläche 2 eines Objektes 2' umfasst, wie in **Fig. 4** dargestellt, eine Konfokal-Lichteinstrahleinrichtung 3 zur Erzeugung und Aussendung eines Konfokal-Lichtes einer Mehrzahl von Wellenlängen in einem multifokalen Beleuchtungsmuster 4. Die Konfokal-Lichteinstrahleinrichtung (hier auch als erste Messlichteinrichtung bezeichnet) 3 kann dabei irgendeine Punktquelle für abgestrahltes Licht sein. Die Konfokal-Lichteinstrahleinrichtung 3 kann beispielsweise einen Globar, insbesondere eine Weißlichtquelle 3' oder eine Xenonlichtquelle umfassen. Ferner kann die Konfokal-Lichteinstrahleinrichtung 3 auch ein oder mehrere LEDs und/oder Laser umfassen. Abhängig von der Art der Lichtquelle 3', wird ein Konfokal-Licht (hier auch als erstes Messlicht bezeichnet) mit mindestens einer Mehrzahl von Wellenlängen ausgesendet. Es kann insbesondere ein Konfokal-Licht eines kontinuierlichen bzw. teilweise kontinuierlichen Spektrums ausgesendet werden. Auch kann das Konfokal-Licht unsichtbares Licht im IR-und/oder UV-Bereich umfassen. Ferner umfasst die Konfokal-Lichteinstrahleinrichtung 3 eine Einrichtung 4', welche ein multifokales Beleuchtungsmuster 4 erzeugen kann. Eine solche Einrichtung 4' kann vorzugsweise ein zweidimensionales Mikrolinsenarray sein. Die Einrichtung 4' zur Erzeugung eines multifokalen Beleuchtungsmusters 4 kann aber auch rein reflektiv sein, wie beispielsweise ein 2D Feld aus (gebogenen) fokussierenden Spiegelelementen. Ferner kann die Konfokal-Lichteinstrahleinrichtung 3 auch eine Kollimationsoptik oder Linse oder Fokussieroptik 10' umfassen, welche das abgestrahlte Licht der Konfokal-Lichteinstrahleinrichtung 3 zunächst kollimiert. Des Weiteren kann die Konfokal-Lichteinstrahleinrichtung 3 auch einen spektralen Filter bzw. Bandpassfarbfilter 14' umfassen. Das multifokale Beleuchtungsmuster 4 umfasst ein Muster aus 2D-Lichtstrahlen, welche jeweils divergent bzw. konvergent ist, abhängig von den Eigenschaften der Einrichtung 4' zur Erzeugung eines multifokalen Beleuchtungsmusters 4 und dem Abstand davon. In anderen Worten wird durch die Einrichtung 4' ein multifokales zweidimensionales Beleuchtungsmuster 4 umfassend nicht-parallele Lichtstrahlen, vorzugsweise mit identischen Eigenschaften, erzeugt.

Wie in **Fig. 4** dargestellt ist, wird das Konfokal-Licht in Richtung eines Konfokal- 60' und Detektionstrahlenganges 60" und zur Projektion des Beleuchtungsmusters 4 auf die zu untersuchende Oberfläche 2 geschickt. Das Konfokal-Licht unterliegt der konfokalen Bedingung der konfokalen Vorrichtung und wird zur Erfassung der Topographie der Oberfläche 2 benötigt. Der Konfokal-Strahlengang 60' umfasst insbesondere den Weg des multifokalen Konfokal-Lichtes von einem Strahlteiler 16 zu einem multichromatischen Objektiv 5 auf die Messebene in der der jeweilige Fokus des Lichtes einer bestimmten Wellenlänge $\lambda_1$, $\lambda_2$, $\lambda_3$ liegt. In einer der Messebenen kann sich dann die zu untersuchende Oberfläche 2 eines Objektes 2' befinden. Das Beleuchtungsmuster 4 wird durch das Objektiv 5 entsprechend auf die zu untersuchende Oberfläche 2 abgebildet, sodass ein Lichtmuster aus punktförmigen Lichtspots mit einem bestimmten Abstand d zueinander auf der Oberfläche 2 entsprechend der Einrichtung zur Erzeugung eines Multifokalen Beleuchtungsmusters 4 entsteht. Der Detektionsstrahlengang 60" betrifft hingegen den Weg, den das an der Oberfläche 2 gestreute Licht von dem Objekt 2' über das Objektiv, den Strahlteiler 16 passierend, durch ein mit dem Beleuchtungsmuster korrespondierendes Lochmuster 6, durch eine spektraldispersive Einrichtung 7 zu einem Detektor 8' nimmt. Ein solches gestreutes Licht kann ein Licht sein, welches die konfokale Bedingung erfüllt, es kann aber auch ein Licht sein, welches lediglich an der Oberfläche gestreut wird ohne die konfokale Bedingung zu erfüllen.

Die chromatisch codierte, konfokale, multifokale, hyperspektrale 3D-Messvorrichtung 1 umfasst ferner eine Hyperspektral-Lichteinstrahleinrichtung 9 (hier auch als zweite Messlichteinrichtung bezeichnet) zur Erzeugung und Aussendung eines Hyperspektral-Lichtes (hier auch als zweites Messlicht bezeichnet) zur flächigen Ausleuchtung der zu untersuchenden Oberfläche 2.

Da über die Vorrichtung 1 Informationen über die spektrale Beschaffenheit der Oberfläche 2 erfasst werden sollen, muss zunächst die konfokale Anordnung für ein Teil des an der Oberfläche 2 gestreuten Lichtes aufgehoben werden. Dadurch entfällt die starke spektrale Filterung, die nur das Licht durch das Pinhole 6 fallen lässt, für dessen Wellenlänge $\lambda_1$, $\lambda_2$, $\lambda_3$ die konfokale Bedingung erfüllt ist. Unter dieser Voraussetzung kann eine Material- bzw. Gewebeunterscheidung durch eine Hyperspektralanalyse und -bildgebung mit der Vorrichtung 1 möglich sein. Die konfokale Bedingung wird durch Anbringen einer zusätzlichen Lichteinstrahleinrichtung 9, welche eine externe Lichtquelle 9' umfassen kann, zur vollflächigen (nicht multifokalen) Bestrahlung der Probenoberfläche 2 aufgehoben.

Dazu wird das Hyperspektral-Licht in Richtung eines Beleuchtungsstrahlengangs 70 ausgesendet und erfüllt dabei die konfokale Bedingung nicht und wird entlang einer Einfallachse 12 vorzugsweise unter einem Winkel $\alpha$ bezüglich der optischen Achse 11 auf die Oberfläche 2 gerichtet. Da das Hyperspektral-Licht zur Erfassung spektraler Eigenschaften der Oberfläche 2 dient, umfasst das Hyperspektral-Licht zumindest eine Mehrzahl von Wellenlängen. Ähnlich wie das Konfokal-Licht, kann das Hyperspektral-Licht auch ein zumindest teilweises kontinuierliches Spektrum und/oder UV- und/oder IR-Anteile umfassen. Die Lichtquellen umfassen ferner eine Mehrzahl an Wellenlängen, beispielsweise Wellenlängen im roten, grünen und/oder blauen Farbspektrum. Die Hyperspektral-Lichteinstrahleinrichtung 9 kann irgendeine Punktquelle für abgestrahltes Licht sein. Sie kann eine Lichtquelle 9' umfassen, welche die gleichen Merkmale wie die oben beschriebenen möglichen Lichtquellen 3' haben kann. Ferner kann für die Hyperspektral-Lichteinstrahleinrichtung 9 und für die Konfokal-Lichteinstrahleinrichtung 3 ein und dieselbe Lichtquelle verwendet werden, wobei jeweils das benötigte Licht für die Lichteinstrahleinrichtungen 3, 9 aufgeteilt wird. Es können aber auch jeweils separate Lichtquellen für beide Lichteinstrahleinrichtungen 3, 9 vorgesehen sein. Die Hyperspektral-Lichteinstrahleinrichtung 9 kann beispielsweise das Hyperspektral-Licht auch ringförmig auf die Oberfläche 2 einstrahlen, sodass Schatten in eine bestimmte Richtung vermieden werden. Ferner kann der Winkel $\alpha$ beliebig variiert und/oder Licht unter verschiedenen Winkeln $\alpha$ eingestrahlt werden, um eine möglichst homogene Ausleuchtung zu erzielen. Das Hyperspektral-Licht wird auf einem Bereich der Oberfläche 2 eingestrahlt, der mindestens teilweise mit dem Bereich überlappt, auf dem das Beleuchtungsmuster 4 projiziert wird. Die Hyperspektral-Lichteinstrahleinrichtung 9 kann eine Kollimationsoptik oder Linse oder Fokussieroptik 10 umfassen.

Die vollflächige Bestrahlung eines Abschnitts einer Oberfläche 2 wird vorzugsweise mit homogenem und kollimiertem Licht erfolgen. Dadurch kann gewährleistet werden, dass an jeder Stelle im dreidimensionalen Messraum die gleiche Beleuchtungsstärke gegeben ist. Inhomogenitäten können zwar durch Kalibrationsmessungen herausgerechnet werden, stellen aber erhöhte Anforderungen an den Dynamikbereich des hyperspektralen Messsystems 1. Ein weiterer Vorteil der kollimierten Beleuchtung, bei gleichzeitiger Verkippung um einen Winkel $\alpha$ zwischen der Beleuchtungs- bzw. Einfalls-12 und Detektions- bzw. optischen Achse 11 zueinander, liegt in der effektiven Vermeidung des Fresnel-Reflexes. Da in der Regel bei direktem Auftreffen des gespiegelten Lichtanteils auf den Detektor 8' das Signal wesentlich höher ist als das des diffus gestreuten Lichts, wird meist der Dynamikbereich des Detektors 8' überschritten. Auch die spektrale Zusammensetzung im Bereich des Direktreflexes entspricht in diesem Fall dann nicht dem Remissionsspektrum der Oberfläche 2. Die Verkippung zur Vermeidung des Direktreflexes kann einerseits umso geringer sein, je kleiner die numerische Apertur des Beleuchtungsstrahlengangs 70 ist. Andererseits ist bei gegebenem Kippwinkel $\alpha$ die Detektionswahrscheinlichkeit eines Direktreflexes, aufgrund von Unebenheiten in der Probenoberfläche 2 oder schrägen Oberflächen 2, umso geringer, je kollimierter das Beleuchtungslicht ist. Um bei verkippten Oberflächen 2 (bezüglich der optischen Achse 11) robust gegenüber dem Direktreflex zu sein, sollte ein großer Kippwinkel $\alpha$ zwischen Beleuchtungs-70 und Detektionsstrahlengang 60" gewählt werden. Das Problem bei einem zu großen Kippwinkel $\alpha$ besteht darin, dass bei dreidimensionalen Proben 2' Abschattungen auftreten, wodurch an den abgeschatteten Bereichen keine spektrale Analyse der Oberfläche 2 vorgenommen werden kann. Das Deutsche Institut für Normung empfiehlt mit der DIN 5033-7 eine 45°/0° bzw. 0°/45° Messanordnung. Damit bei dreidimensionalen Oberflächen 2 eventuelle Abschattungen und der damit einhergehende Intensitätsabfall vermieden werden können, eignet sich eine ringförmige Anordnung der Beleuchtung um den Detektionsstrahlengang 60" bzw. die optische Achse 11, welche die Bedingung der oben genannten Norm erfüllt. Ein Nachteil der ringförmigen Anordnung besteht darin, dass sie ein größeres Volumen einnimmt, welches beispielsweise zumindest in der Mundhöhle nicht vorhanden ist. Ein Nachteil der verkippten, kollimierten Beleuchtung ist, dass bei sehr glatten Oberflächen 2, wie beispielsweise Spiegeloberflächen, sehr wenig bis kein gestreutes Licht vorhanden ist, wodurch eine spektrale Messung der Oberfläche erschwert wird.

Ferner kann die Hyperspektral-Lichteinstrahleinrichtung 9 spektrale Filter oder Bandpassfarbfilter 14 umfassen. Außerdem kann die Hyperspektral-Lichteinstrahleinrichtung 9 optional Polarisationsoptik(en) 15 und/oder eine $\lambda/4$ Optik 13 umfassen, die zur Unterdrückung von Fresnel-Reflexen dienen. Eine weitere/s $\lambda/4$ Optik/Plättchen 13 wird in dazu in dem Detektionsstrahlengang 60" platziert. Die Zeichen $\gamma_1$ (horizontal polarisiert), $\gamma_2$ (zirkular polarisiert) in dem Beleuchtungsstrahlengang 70 sowie die Zeichen $\gamma_3$ (zirkular polarisiert), $\gamma_4$ (vertikal polarisiert) bezüglich des Hyperspektral-Lichtes geben die jeweiligen Polarisationssituationen an den entsprechenden Positionen an. Die Zeichen $\nu_1$ (horizontal polarisiert), $\nu_2$ (zirkular polarisiert) geben die jeweiligen Polarisationssituationen an den entsprechenden Positionen im Detektionsstrahlengang des Konfokal-Lichts an. Es können auch andere Polarisationskombinationen an den entsprechenden Positionen eingenommen werden.

Bei dreidimensionalen Proben 2' sind trotz schräger Beleuchtung meistens Stellen vorhanden, bei denen die gerichtete Reflexion in den Detektionsstrahlengang 60" gelangen kann. Da das dreidimensionale Messsystem mit dem Direktreflex arbeitet und die diffuse Reflexion vorzugsweise unterdrückt werden soll, sind die Konfokal-Lichteinstrahleinrichtung 3, welche eine interne Lichtquelle 3' umfassen kann, und der Detektionsstrahlengang 60' vorzugsweise mit einer gemeinsamen $\lambda/4$-Platte 13 und jeweils einem Polarisationsfilter 15 (nicht gezeigt) ausgestattet, wobei die Durchlassrichtungen der Polarisationsfilter 15 um 90° zu einander gedreht sind. Die Polarisationsrichtung wird bei dem Direktreflex nicht verändert. Bei der diffusen Reflexion wird hingegen die Polarisationsrichtung aufgehoben. Für die topographische Messung lässt das System nur Licht einer bestimmten Polarisationsrichtung zum Detektor 8' hindurch, wodurch vorzugsweise das Licht des Direktreflexes erfasst wird.

Bei der spektralen Messung soll im Gegensatz zur topographischen Messung die gerichtete Reflexion vorzugsweise unterdrückt werden. Um dies zu verwirklichen, soll die Hyperspektral-Lichteinstrahleinrichtung 9, welche externe Lichtquelle 9' umfassen kann, vorzugsweise ebenfalls mit einem Polarisator 15 und einem $\lambda/4$-Plättchen 13 versehen werden. Die Anordnung dieser beiden Komponenten im Beleuchtungsstrahlengang 70 sollte vorzugsweise so gewählt werden, dass der detektionsseitige Polfilter 15 im Messsystem unverändert bleiben kann und dennoch die gerichtete Reflexion unterdrückt wird. Das Licht der Hyperspektral-Lichteinstrahleinrichtung 9 wird in diesem bevorzugten Fall so polarisiert, dass deren Polarisationsrichtung 90° zu der Polarisationsausrichtung des Lichts der Konfokal-Lichteinstrahleinrichtung 3 gedreht ist. Wie in **Fig. 4** schematisch dargestellt, wird das Licht in zirkular polarisiertes Licht $\nu_2$,

$\gamma_2$, $\gamma_3$ umgewandelt. Nach der Fresnel-Reflexion an der Oberfläche 2 des Objekts 2' wird das Licht an der $\lambda/4$-Platte 13 des Detektionsstrahlenganges 60" von zirkular $\nu_2$, $\gamma_3$ zu linear polarisiertem Licht $\nu_1$, $\gamma_4$ zurück umgewandelt und wird dann im Detektionsstrahlengang 60" blockiert. Damit ist es möglich, die Glanzwirkung bzw. Fresnel-Reflexion einzudämmen, was die spektrale Erfassung an rauen und glatten dreidimensionalen Proben erleichtert.

Die chromatisch codierte, konfokale, multifokale, hyperspektrale 3D-Messvorrichtung 1 umfasst ferner eine chromatisch codierte konfokale 3D-Detektionseinheit 8. Diese Detektionseinheit umfasst das Objektiv 5 mit chromatischer Aberration zur Abbildung von Foki des Beleuchtungsmusters 4 auf die Oberfläche 2, das mit dem Beleuchtungsmuster 4 korrespondierende Lochmuster 6 zum Passieren des an der Oberfläche 2 gestreuten Lichtes, die spektraldispersive Einrichtung 7 zum wellenlängenabhängigen Auffächern des an der Oberfläche 2 gestreuten Lichtes und einen Detektor 8', der beispielsweise eine CCD Kamera sein kann, zum ortsaufgelösten Erfassen des an der zu untersuchenden Oberfläche 2 gestreuten Konfokal-Lichtes und Hyperspektral-Lichtes. Die spektraldispersive Einrichtung 7 kann beispielsweise ein Prisma sein oder ein Gitter oder ein anderes optisches Element, welches Licht nach Wellenlängen auffächern kann. Das Lochmuster 6 kann identisch mit dem Beleuchtungsmuster 4 sein oder in irgendeiner Beziehung zu dem Beleuchtungsmuster 4 stehen.

Auch wenn die erste Messlichteinrichtung 3 und die zweite Messlichteinrichtung 9 (mit den entsprechenden Lichtquellen 3' bzw. 9') in der dargestellten bevorzugten Ausführungsform als eigenständige Einrichtungen unabhängig voneinander beschrieben wurden, können beide Messlichteinrichtungen in einer anderen Ausführungsformen eine oder mehrere Komponenten gemeinsam nutzen. Besonders bevorzugt nutzen sie beide eine gemeine Lichtquelle (z.B. die Lichtquelle 3'). Dadurch stimmen das erste und zweite Messlicht spektral sehr gut überein, was insbesondere eine Kalibrierung bei der chromatischen Codierung vereinfacht und verbessert. Alternativ oder zusätzlich können beide Messlichteinrichtungen auch zumindest einen Teil des Strahlengangs bei der Einstrahlung des entsprechenden Messlichts gemeinsam nutzen. Beispielsweise wird in einer anderen bevorzugten Ausführungsform auch das zweite Messlicht ähnlich dem beschriebenen ersten Messlicht über den Strahlteiler 16 in den Strahlengang eingekoppelt. In diesem Fall kann beispielsweise zur Einstrahlung des zweiten Messlichts einfach das Mikrolinsenarray 4' aus dem Strahlengang entfernt werden, um vom ersten Messlicht auf das zweite Messlicht umzuschalten. Gegebenenfalls kann auch noch eine Polarisation des eingestrahlten Lichts geändert werden, um vom ersten Messlicht zum zweiten Messlicht umzuschalten. Auch ist es denkbar, für die hyperspektrale Messung entweder ein zweites, nicht hyperchromatisches Objektiv zu nutzen oder durch Ein- bzw. Ausschwenken eines optischen Elementes (beispielsweise eines diffraktiven Elements) zwischen hyper- und achromatischer Ausführung des Objektivs zu alternieren.

Wie bereits erläutert, wird der Spektralbereich in jedem Messpunkt entlang einer Linie, der sogenannten "region of interest" (ROI) dargestellt. Der Wellenlängenbereich der Hyperspektral-Lichteinstrahleinrichtung 9 sollte vorzugsweise dem Wellenlängenbereich des Konfokal-Messsystems (Elemente der Vorrichtung 1 aus **Fig. 4**, die den Elementen der Konfokal-Vorrichtung 200 aus **Fig. 2** entsprechen) angepasst werden, damit in den ROI's kein Übersprechen zu den benachbarten ROI's stattfindet. Mit einem optionalen Bandpassfilter 14, der vorzugsweise den Wellenlängenbereich von 458 nm bis 720 nm begrenzt und vorzugsweise in dem Beleuchtungsstrahlengang 70 installiert ist, soll dieses Übersprechen vermieden werden. Somit können die Wellenlängenbereiche der Systemerweiterung (Hyperspektral-Lichteinstrahleinrichtung 9) und der chromatisch codierten, konfokalen, multifokalen, 3D-Messvorrichtung (wie beispielhaft in **Fig. 2** dargestellt) zueinander angepasst werden.

Damit in diesem bevorzugten Wellenlängenbereich genügend Intensität der einzelnen Wellenlängen vorhanden ist, muss eine dazu passende Lichtquelle 9' für die Hyperspektral-Lichteinstrahleinrichtung 9 ausgewählt werden. Dafür eignet sich beispielsweise besonders eine Xenon-Kurzbogenlampe (ME300BFM, PerkinElmer, Waltham USA), welche auch bevorzugt als Lichtquelle 3' für die Konfokal-Lichteinstrahleinrichtung 3 verwendet werden kann. In diesem bevorzugten Wellenlängenbereich weist die genannte Kurzbogenlampe ein näherungsweise bzw. mindestens in Teilen konstantes Spektrum auf.

Für eine eindeutige Topographiemessung und Hyperspektralanalyse ist eine simultane Detektion nicht geeignet. Der Grund dafür ist, dass beide Informationen im ROI überlagert wären und eine eindeutige Trennung der Informationen nicht möglich ist. Deshalb sollten die Datenerfassung und damit das Ansteuern der beiden Lichteinstrahleinrichtungen 9, 3 vorzugsweise sequentiell erfolgen, mit dem Nachteil, dass die Gesamtmesszeit erhöht wird. Eine simultane bzw. gleichzeitige Messung topographischer und spektraler Informationen ist damit jedoch nicht ausgeschlossen und könnte in manchen Fällen zur Verkürzung der Detektionsdauer sogar bevorzugt sein. Aufgrund des chromatisch codierten Messprinzips wird jeweils nur eine Farbe $\lambda_1$, $\lambda_2$, $\lambda_3$ scharf auf das Pinhole bzw. Pinholearray 6 und damit auf den Detektor 8' abgebildet. Andere Wellenlängen $\lambda_1$, $\lambda_2$, $\lambda_3$ werden zwar detektiert, aber mit unscharfer Abbildung und damit aus einem größeren Messareal. Dadurch verringert sich die laterale Auflösung bei Wellenlängen $\lambda_1$, $\lambda_2$, $\lambda_3$ außerhalb der scharfen Abbildung. Dieser Umstand wird nachfolgend näher beschrieben.

Die chromatisch codierte, konfokale, multifokale, hyperspektrale 3D-Messvorrichtung 1 umfasst außerdem eine Auswerteeinheit 80, wie beispielsweise ein Computer zum Ermitteln von Topographie und korrespondierenden spektralen Eigenschaften der zu untersuchenden Oberfläche 2.

Die laterale Auflösung in einem Einzelbild ist durch den Pinholeabstand des Pinholearrays 6 bzw. den Mikrolinsenabstand des Mikrolinsenarrays 4' begrenzt. Dieser Abstand der Pinholes bzw. Mikrolinsen entspricht im Messbereich einem Abstand der Foki von 350 μm. Um die Auflösung im Gesamten zu verbessern, wird die Probe bzw. das Messsystem vorzugsweise bewegt werden. Je kleiner dabei die Schrittweite ist, desto höher ist dabei die Auflösung. Für eine quantitative Hyperspektralanalyse erfolgt vorzugsweise ein Weißabgleich. Dabei wird das Spektrum einer Referenzprobe, beispielsweise ein Reflexionsnormal aus einem Spectralon, erfasst. Mit diesem optionalen Weißabgleich werden das hyperspektrale Messsystem inkl. wellenlängenabhängiger Empfindlichkeit des Kamerachips, das Lampenspektrum und die spektrale Transmission der optischen Komponenten herausgerechnet.

Für die Eliminierung des Chiprauschens soll vorzugsweise ein Dunkelspektrum ermittelt werden. Um bei der Darstellung einen reellen Farbeindruck durch das ermittelte Spektrum zu erhalten, soll vorzugsweise die Empfindlichkeitskurve des Auges mit einbezogen werden. Mit den dadurch gewonnenen Farbwerten können RGB-Werte berechnet werden, um eine farbgetreue Darstellung am Monitor zu erreichen. Für eine detailliertere Auswertung des ermittelten Spektrums kann eine Derivationsspektroskopie in Betracht gezogen werden.

Im Folgenden wird das Konzept der Hyperspektralanalyse an verschiedenen Beispielen theoretisch erläutert. Die theoretische beispielhafte Beschreibung soll dem allgemeinen Verständnis dienen, jedoch nicht einschränkend auf den Umfang der Erfindung wirken.

Durch das Anbringen einer Hyperspektral-Einstrahleinrichtung kann die konfokale Anordnung des topographischen Messsystems aufgehoben werden. Dadurch ist es möglich, eine hyperspektrale Analyse von Oberflächen durchzuführen. Wie zuvor schon erwähnt, hat der chromatische Fehler des Objektivs einen Einfluss auf die laterale Auflösung bei der Hyperspektralanalyse. Der theoretische Hintergrund hierzu wird nachfolgend dargelegt.

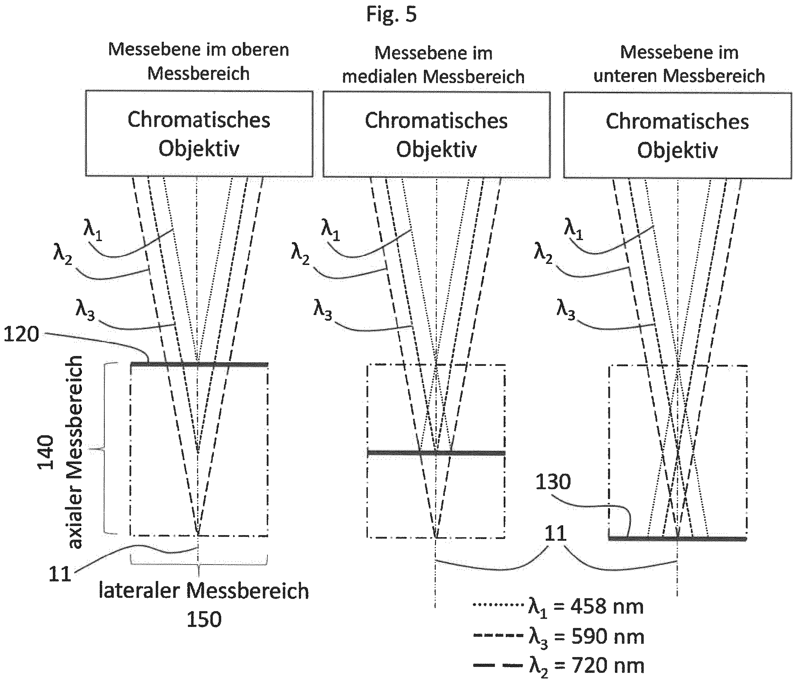

Wie in **Fig. 5** schematisch dargestellt ist, hat jede Wellenlänge $\lambda_1$, $\lambda_2$, $\lambda_3$ ihren Fokus an einem anderen axialen Abstand im Messbereich. Der Fokus bei 458 nm, der unteren Grenze des genutzten Spektralbereichs, liegt dabei mit 2,1 mm am nächsten zum Objektiv (In diesem konkreten Beispiel entsprechen $\lambda_1$, $\lambda_2$, $\lambda_3$ den Wellenlängen 458, 590 und 720 nm ohne Einschränkung für deren Verwendung in anderen Figuren). Im Gegensatz dazu ist der Fokus bei 720 nm, der oberen Grenze, mit 14,6 mm am weitesten vom Objektiv entfernt. Die Distanz von 12,5 mm zwischen den beiden genannten Foki entspricht dem axialen Messbereich 140 für die Topographiemessungen. In diesem axialen Messbereich 140 sind die Foki der anderen Wellenlängen $\lambda_1$, $\lambda_2$, $\lambda_3$ verteilt. Das Objektiv bildet das Pinhole im Abbildungsmaßstab 1:2 in die Messebene ab. Die Größe des Pinholes entspricht einem Durchmesser von 12,5 μm, womit der Durchmesser des abgebildeten Pinholes auf der Probe 25 μm beträgt. Befindet sich nun eine zu messende Oberfläche in der Abbildungsebene bei 458 nm, wie in **Fig. 5** links dargestellt ist, so hat bei dieser Wellenlänge das Messareal für die Hyperspektralanalyse einen Durchmesser von 25 μm, was der lateralen Auflösung der Messung entspricht. Bei anderen Wellenlängen wird das Pinhole unscharf auf die Probenoberfläche abgebildet bzw. vergrößert sich entsprechend der Unschärfe des abgebildeten Pinholes die örtliche Ausdehnung des Messareals und verschlechtert sich entsprechend die laterale Auflösung. Die größte Ausdehnung ist bei der Wellenlänge $\lambda_1$, $\lambda_2$, $\lambda_3$ zu erwarten, deren Fokusebene am weitesten von der Fokusebene, in der sich die Oberfläche befindet, entfernt ist. Dies entspricht im gewählten Beispiel der oberen spektralen Grenze bei 720 nm. Zusammenfassend lässt sich sagen, dass, je nach Abstand der Probenoberfläche zum Objektiv, für die Wellenlänge $\lambda_1$, $\lambda_2$, $\lambda_3$, bei der die Abbildung des Pinholes scharf ist, die laterale Auflösung mit 25 μm am besten ist und für die anderen Wellenlängen die laterale Auflösung mit zunehmendem Abstand zu dieser Wellenlänge schlechter wird.

Befindet sich die Messebene in der Abbildungsebene der oberen Wellenlänge $\lambda_2$ bei 720 nm, wie in **Fig. 5** rechts dargestellt ist, so ist die größte unscharfe Abbildung und damit die schlechteste laterale Auflösung bei der kleinsten Wellenlänge $\lambda_1$ (458 nm) zu erwarten. Von 720 nm bis 458 nm vergrößern sich die Abbildungen bzw. die laterale Auflösung sukzessive.

Befindet sich die Messebene zwischen den Messgrenzen, also beispielsweise in der Abbildungsebene von 590 nm, so ist die scharfe Abbildung mit 25 μm bei 590 nm. Die Messareale für die anderen Wellenlänge vergrößern sich sukzessive von 590 nm zu 458 nm und von 590 nm zu 720 nm. Nimmt man an, dass der chromatische Shift entlang der optischen Achse linear verläuft und sich die Abbildungsebene von 590 nm in der Mitte des Messbereichs befindet, dann ist die Ausdehnung der Messareale bei den beiden Wellenlängen 720 nm und 458 nm gleich groß und nur halb so groß im Vergleich zu den Fällen, wenn sich die Messebene an den axialen Grenzen des Messbereichs befindet. Damit ist in der Mitte des Messbereichs die beste laterale Auflösung über alle Wellenlängen $\lambda_1$, $\lambda_2$, $\lambda_3$ zu erwarten. Damit eine Vorstellung darüber erlangt werden kann, wie groß die Abbildungen des Pinholes für die einzelnen Wellenlängen $\lambda_1$, $\lambda_2$, $\lambda_3$ in den jeweiligen Messebenen sind, wird eine geometrisch-optische Betrachtung durchgeführt. Durch die geometrische Beziehung

$$A_{\emptyset} = P_{\emptyset,Abb.} + \left(2 * \tan\left(\sin^{-1}\left(NA_{Mf}\right)\right) * z\right) \qquad \text{Formel 1}$$

kann der Durchmesser *Aø* der unscharfen Abbildung bei einer Wellenlänge in der zu betrachtenden Messebene berechnet werden. Dazu ist die Kenntnis des Durchmessers $P\phi_{,Abb}$ der scharfen Abbildung des Pinholes, der messfeldseitigen Numerischen Apertur $NA_{Mf}$ sowie der axiale Abstand z von der Abbildungsebene der zu ermittelnden Wellenlänge $\lambda_1$, $\lambda_2$, $\lambda_3$ zur Messebene notwendig. Dabei wird angenommen, dass der axiale Shift linear verläuft sowie die Numerische Apertur für alle Wellenlängen identisch ist. Aus zuvor beschriebenen Anordnung einer Vorrichtung ergibt sich eine messfeldseitige $NA_{Mf}$ von 0,075, eine Länge des axialen Messbereichs von 12,5 mm sowie der Durchmesser des scharf abgebildeten Pinholes von 25 $\mu$m. Durch Einsetzten dieser Parameter in die genannte Formel 1, ergibt sich eine wellenlängenabhängige Abbildungsgröße des Pinholes von 25 $\mu$m bis 1779 $\mu$m an den äußeren axialen Grenzen des Messfeldes. In der Mitte des Messfeldes, wie in **FIG. 5** im mittleren Bild dargestellt ist, ergibt sich eine wellenlängenabhängige Abbildungsgröße des Pinholes von 25 $\mu$m bis 902 $\mu$m. Bei einer linearen Betrachtung des Wellenlängenshifts wird bei jeder Wellenlängenänderung eine Änderung des Durchmessers von 6,79 $\mu$m pro nm erwartet.

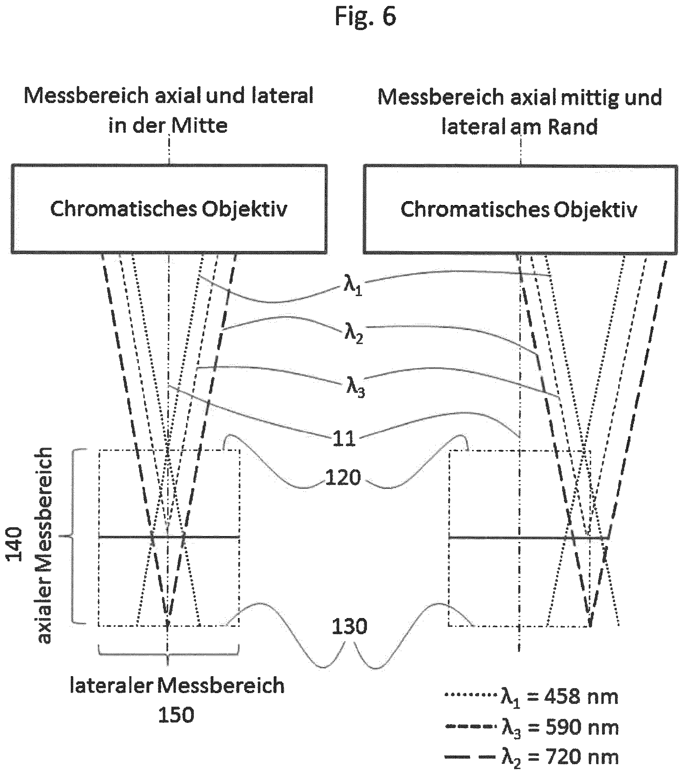

Eine weitere Ursache, die die laterale spektrale Auflösung vermindert, ist in **Fig. 6** dargestellt. Das optische Messsystem ist nur näherungsweise telezentrisch, was bedeutet, dass die Eintrittspupille sehr weit von der Optik entfernt, jedoch nicht im Unendlichen liegt. Bei einem Hyperchromaten ist es auch nicht möglich, eine Telezentrie für alle Wellenlängen $\lambda_1$, $\lambda_2$, $\lambda_3$ zu erreichen. Im besten Fall ist sie für eine Wellenlänge gegeben. Hinzu kommen Abbildungsfehler, Toleranzen und Justagefehler, die die Telezentrie verschlechtern. Deshalb ist zu erwarten, dass mit zunehmendem Abstand zur optischen Achse eine wellenlängenabhängige laterale Verschiebung der Abbildungsorte auftritt bzw. sehr wahrscheinlich auftreten kann. Auf der optischen Achse 11, wie in **Fig. 6** links dargestellt ist, liegen die Zentren der Messareale für die einzelnen Wellenlängen $\lambda_1$, $\lambda_2$, $\lambda_3$ übereinander. Je weiter man sich lateral von der optischen Achse 11 entfernt (siehe **Fig. 6** rechts), desto größer ist die wellenlängenabhängige Verschiebung der Messarealzentren zueinander. Dies führt zu einer weiteren Verschlechterung der Auflösung, entsprechend dem Areal, welches sich aus der Überlagerung aller Messareale ergibt. Da das Pinhole kreisförmig ist, ist auf der optischen Achse 11 ein kreisförmiges Messareal zu erwarten. Bei einem lateral außermittigen Messpunkt wird das resultierende Areal durch die Verschiebung der einzelnen Messareale elliptisch. Die Hauptachse der Ellipse zeigt dabei in Richtung der optischen Achse 11 des Gesamtsystems.

Dieser Effekt ist in der Mitte des axialen Messbereichs zu erwarten. Bei Betrachtung des Effektes in der proximalen oder der distalen Hälfte des axialen Messbereichs wird kein ellipsenförmiger Einflussbereich im lateralen Rand erwartet. Jedoch wird auch dort eine Verschiebung in den Zentren der wellenlängenabhängigen Messareale vermutet. Da aber die Gesamtgröße des Messareals von einer bestimmten Wellenlänge $\lambda_1$, $\lambda_2$, $\lambda_3$ dominiert wird, sind die anderen Messareale innerhalb der dominanten Wellenlänge verschoben. Dadurch ist das Messareal zwar kreisförmig, aber die Messareale der einzelnen Wellenlängen $\lambda_1$, $\lambda_2$, $\lambda_3$ sind nicht zentrisch zueinander.

Ein weiterer Faktor, der das spektrale Auflösungsvermögen beeinflusst, ist die spektrale Einheit des optischen Systems. Die Optik des Prismenspektrographen bildet das Pinhole mit einem Durchmesser von 12,5 $\mu$m im Abbildungsmaßstab 1:1 auf den CCD-Chip ab. Dabei umfasst die dispersive, linienförmige Abbildung des Pinholes, welches durch das Prisma im Prismenspektrograph hervorgerufen wird, ein ROI von 100 Pixeln. Ein Pixel weist eine Größe von 5,6 $\mu$m * 5,6 $\mu$m auf. Diese Faktoren dominieren das Auflösungsvermögen des Prismenspektrographen. Die kleinste auflösbare Wellenlänge $\Delta\lambda_{Aufl.}$ ergibt sich durch:

$$\Delta\lambda_{Aufl.} = \frac{\Delta\lambda_{ROI} * \left\lceil \frac{D_{Ph}}{I_{Pix}} \right\rceil}{ROI_{Anz.Pix.}} \qquad \textbf{Formel 2}$$

Dabei entspricht $\Delta\lambda_{ROI}$ der Größe des Wellenlängenbereiches, welcher über ein ROI, mit einer Anzahl $ROI_{Anz.Pix.}$ von 100 Pixel, aufgespreizt wird (720 nm - 458 nm = 264 nm). Der Quotient dieser beiden Größen multipliziert mit dem Quotienten aus dem Durchmesser des Pinholes $D_{Ph}$ und der Seitenlänge des Pixels $I_{Pix}$ ergibt eine Wellenlängenauflösung des Spektrums von 7,92 nm. Das Verhältnis von Pinholedurchmesser zu Seitenlänge des Pixels muss aufgerundet werden, da die Abbildung nur auf ganze Pixel erfolgen kann. Bei dem Auflösungsvermögen von 7,9 nm wird davon ausgegangen, dass die Dispersion auf dem CCD-Chip linear verläuft. In der Realität ist im unteren Wellenlängenbereich die Dispersion größer als im oberen Wellenlängenbereich bei 720 nm. Dies bedeutet, dass im unteren Wellenlängenbereich ein höheres Auflösungsvermögen als der berechnete Wert von 7,9 nm zu erwarten ist, im oberen Wellenlängenbereich dagegen ein schlechteres. Der Wert von 7,9 nm stellt daher einen Mittelwert über den gesamten Wellenlängenbereich dar.

Zusammenfassend lässt sich sagen, dass das laterale Auflösungsvermögen im Messfeld je nach Wellenlänge und Messebene im Bereich von 25 $\mu$m bis 1807 $\mu$m liegt. Damit können Farbübergänge bzw. Materialgrenzen nur in dieser Genauigkeit ermittelt werden. Durch die Entwicklung eines geeigneten Algorithmus und der Kenntnis der axialen Lage der Messebene kann die Auflösung verbessert werden. Das spektrale Auflösungsvermögen der Detektionseinheit beläuft sich im Mittel auf 7,9 nm. Kleinere spektrale Änderungen im Spektrum als 7,9 nm werden dabei nicht wahrgenommen.

Im Folgenden sollen die theoretischen Untersuchungen (mit Hilfe der Zemax-Software) auf Basis des beschriebenen Konzeptes näher erläutert werden. Wie bereits erwähnt, wird die laterale Auflösung im Messfeld durch das chromatisch codierte Objektiv vermindert. Durch eine vereinfachte geometrisch-optische Betrachtung wurde festgestellt, dass in den axialen Rändern das laterale Auflösungsvermögen je nach Wellenlänge in dem Bereich von 25 $\mu$m bis 1807 $\mu$m liegt. In der Mitte des axialen Messfeldes zeigen die geometrisch-optischen Betrachtungen ein um den Faktor 2 besseres Auflösungsvermögen. Um die qualitativen Überlegungen durch quantitative Werte zu stützen, werden in dem Raytracing-Simulationsprogram Zemax weitere Untersuchungen des chromatisch codierten Objektivs durchgeführt. Dabei wird die Optik realitätsgetreu inkl. des Einflusses von optischen Aberrationen, jedoch unter Ausschluss von Justagefehlern und Fertigungstoleranzen, betrachtet. Auch die Wellenlängenabhängigkeit der Numerischen Apertur und des Abbildungsmaßstabs, die durch den Hyperchromaten nicht zu vermeiden ist, werden berücksichtigt.

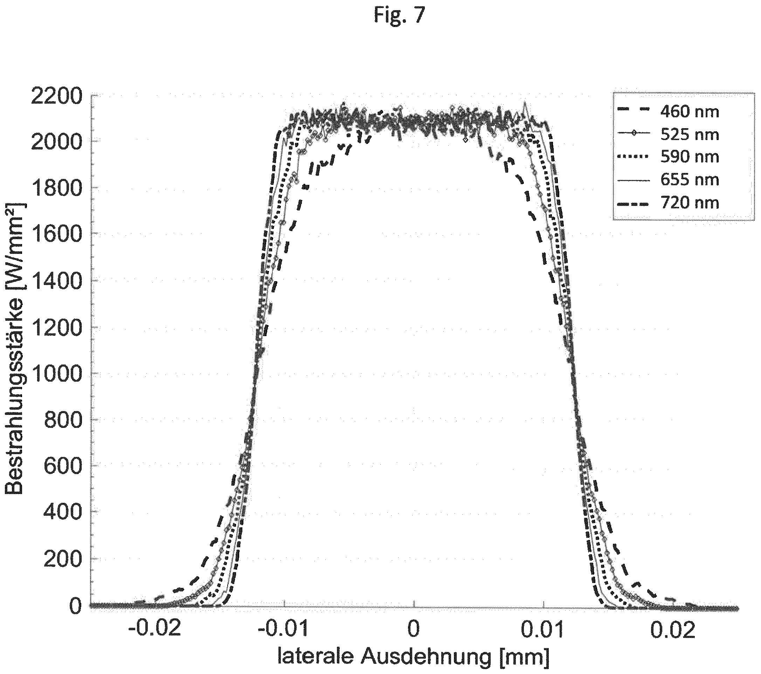

In Zemax kann mit dem Tool "Geometric Image Analysis" die Abbildung eines Pinholes durch das chromatisch codierte Objektiv in die Messebene sowie Größe und Intensitätsverteilung in der Abbildungsebene simuliert werden. Angenommen wurde dafür, dass das Pinhole homogen ausgeleuchtet ist und das Licht im Bereich des Pinholes in alle Richtungen gleichmäßig abstrahlt. Um einerseits das Rauschen in der Abbildung und andererseits die Simulationszeit gering zu halten, wurden als Kompromiss 50 $\times$ 10$^6$ Strahlen mit einer Gesamtintensität im Pinhole von 1 W für die Simulation herangezogen. Es wurde zunächst nur das Pinhole auf der optischen Achse betrachtet. **Fig. 7** zeigt die Intensitätsverteilungen sowie die daraus resultierenden Kontraste für die Abbildungen bei den einzelnen Wellenlängen $\lambda_1$, $\lambda_2$, $\lambda_3$ in ihren jeweiligen Fokusebenen. Die Halbwertsbreite der Intensitätsverteilung ist dabei mit einer Toleranz von $\pm$0,1 $\mu$m für alle Wellenlängen $\lambda_1$, $\lambda_2$, $\lambda_3$ mit 25 $\mu$m näherungsweise identisch.

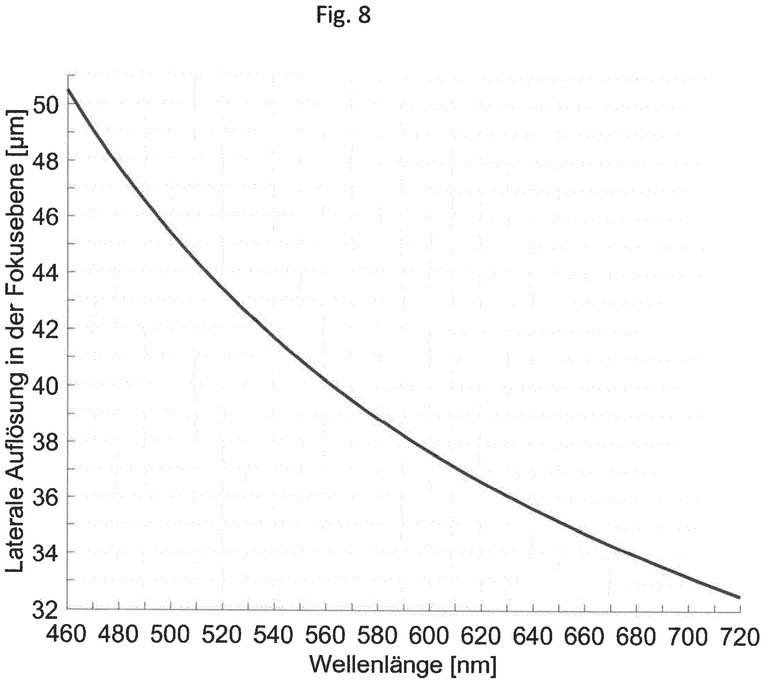

Bei einer inversen Betrachtung des Strahlenverlaufs, mit einem homogen ausgeleuchteten Messfeld, welches diffus abstrahlt, gelangen die Strahlen, die sich im Ausdehnungsbereich der Intensitätsverteilung befinden und durch die Aperturblende gelangen, ins Pinhole und somit auf den Detektor. Die maximale Ausdehnung der Intensitätsverteilung ist ein Maß für die Fläche, aus der ein Signal bei der Hyperspektralanalyse erfasst wird. Wie der **Fig. 7** und **Fig. 8** zu entnehmen ist, nimmt diese Fläche mit steigender Wellenlänge ab.

Der maximale Durchmesser wurde in der Merit Funktion in Zemax mit dem Operator "REAX" ermittelt. Dabei wurde der äußerste Feldpunkt des abzubildenden Pinholes betrachtet und der Strahl ermittelt, dessen Durchstoßpunkt in der Messebene die größte Entfernung zur optischen Achse hat. Abbildung 23 zeigt den Verlauf des Durchmessers in Abhängigkeit von der Wellenlänge. Dieser beträgt 50,5 $\mu$m bei 460 nm und sinkt in einem nichtlinearen Verlauf auf 32,5 $\mu$m bei 720 nm. Diese Kurve entspricht der bestmöglichen lateralen Auflösung bei der jeweiligen Wellenlänge und jeweils in deren Abbildungsebene.

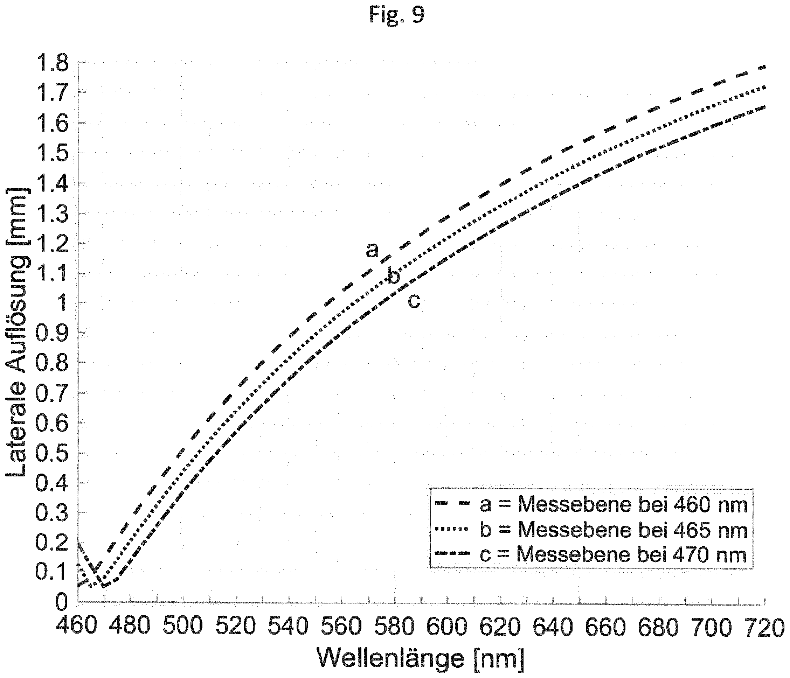

Mit der gleichen Vorgehensweise wird auch die größtmögliche Ausdehnung aller unscharfen Abbildungen ermittelt. Dadurch erhält man den Verlauf der wellenlängenabhängigen lateralen Auflösung in den jeweiligen Messebenen. In **Fig. 9** ist die Abhängigkeit des Durchmessers von der Wellenlänge in drei Messebenen des proximalen Messbereichs, d.h. bei geringster Entfernung zum Objektiv, dargestellt. Die Kurve a zeigt dabei das wellenlängenabhängige laterale Auflösungsvermögen in der proximalen Messebene des Messbereichs, welches gleichzeitig der Abbildungsebene für 460 nm entspricht. Dabei ist zu erkennen, dass die laterale Auflösung in einem nichtlinearen Verlauf abnimmt.

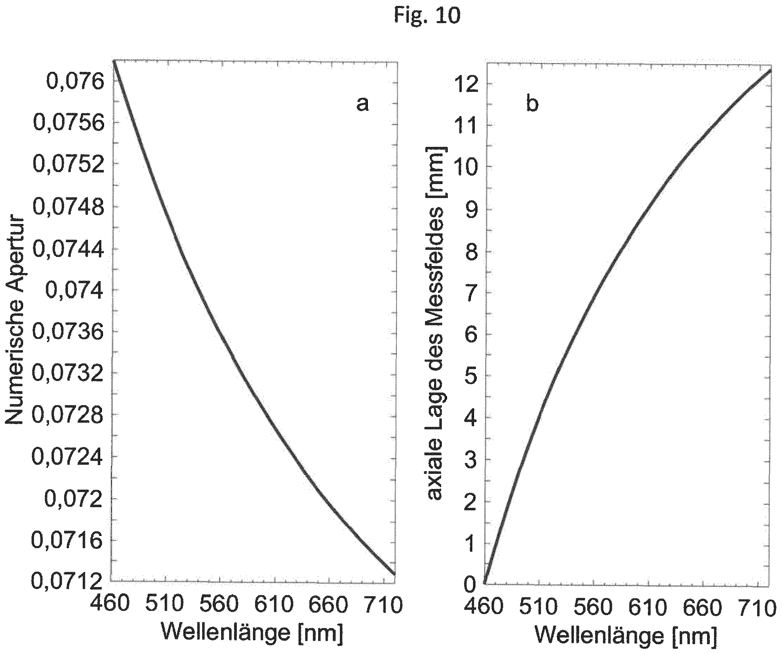

Wird die Messebene in die Abbildungsebene von 465 nm bewegt, so verschiebt sich die Kurve nach unten, und in ähnlicher Weise bei 470 nm ebenfalls nach unten. Die unterschiedliche Form der Kurven, zu erkennen an dem mit der Wellenlänge zunehmenden vertikalen Abstand der drei Kurven, und deren nichtlinearer Verlauf kann durch den nichtlinearen axialen chromatischen Shift des Objektivs (**Fig. 10**, rechts) und der Numerischen Apertur (**Fig. 10**, links) erklärt werden.

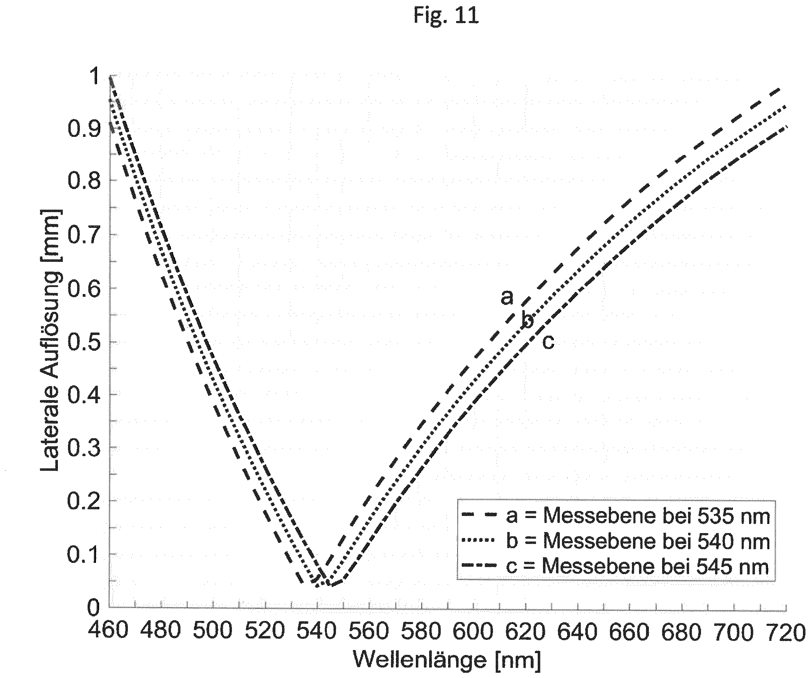

Die bestmögliche Auflösung über den gesamten Messbereich wird bei scharfer Abbildung bei 540 nm erreicht. Dabei steigt der Durchmesser der Abbildung von 42 $\mu$m in beide Richtungen der Wellenlängenbereiche auf 950 $\mu$m an, welches in **Fig. 11** die Kurve b repräsentiert.

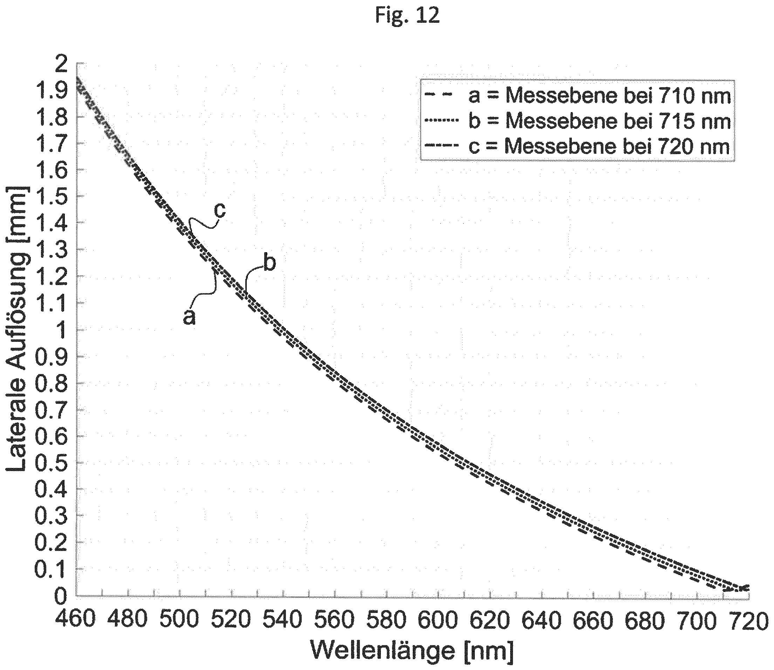

Liegt die Abbildungsebene im distalen Messbereich, d.h. bei scharfer Abbildung bei 720 nm, so verschlechtert sich die Gesamtauflösung wieder (**Fig. 12**). Hier bewegt sich die wellenlängenabhängige Auflösung zwischen 30 $\mu$m und 1950 $\mu$m. Dabei ist die Gesamtauflösung insgesamt schlechter als in der obersten Abbildungsebene bei 460 nm. Dafür ist die wellenlängenabhängige Numerische Apertur verantwortlich, die bei 460 nm größer als bei 720 nm ist und deshalb zu größerer Unschärfe führt.

Obwohl in der Simulation die Messebene immer um 5 nm-Wellenlängenschritte verschoben wurde, verkleinerte sich der axiale Abstand der Messebenen im Messfeld nicht linear. Wie aus **Fig. 10** hervorgeht, folgt der Verlauf des axialen chromatischen Shifts einer Krümmung und keinem linearen Verlauf. Daher verkleinert sich der Abstand der Messebenen ebenfalls exponentiell hin zu größeren Wellenlängen. Dies zeigt sich in dem unterschiedlichen Betrag der vertikalen Abstände der Kurven zueinander in der **Fig. 9, Fig. 11** und **Fig. 12.**

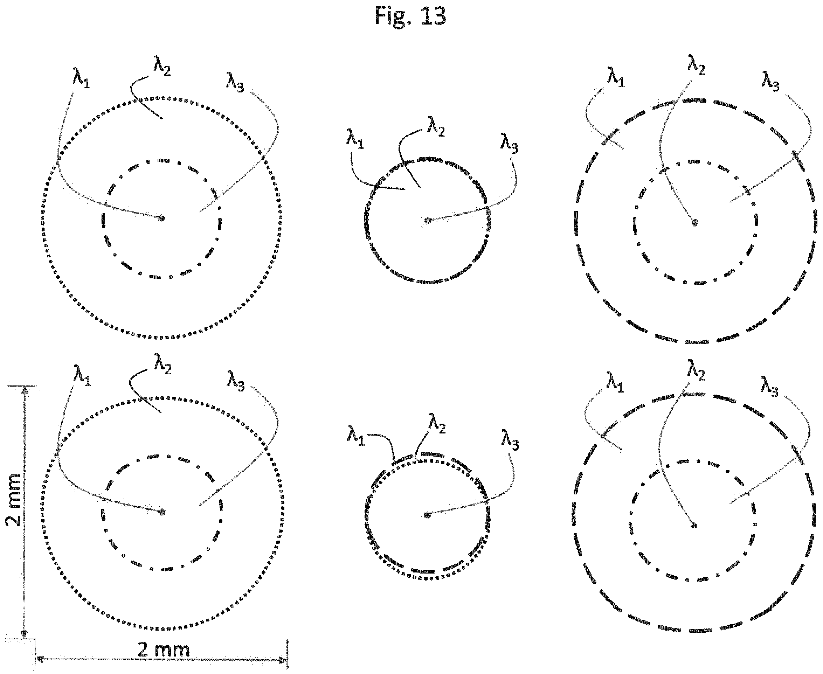

Bislang wurde das laterale wellenlängenabhängige Auflösungsvermögen entlang der optischen Achse bei Lage des Messpunkts auf der optischen Achse untersucht. Der Einfluss der lateralen Lage des Messpunkts außerhalb der optischen Achse wurde ebenfalls in Zemax simuliert und ist in **Fig. 13** anhand resultierender Ausdehnung der Pinhole-Abbildung und damit der resultierenden lateralen Auflösung dargestellt.

Das Auflösungsvermögen am lateralen Rand ist ähnlich, wie auf der optischen Achse. Jedoch sind die Pinhole-Abbildungen am lateralen Messrand zueinander verschoben. Je nach Lage der Messebene verschieben sich die wellenlängenabhängigen Pinhole-Abbildungen in unterschiedliche Richtungen. Befindet sich die Messebene beispielsweise in der Abbildungsebene bei 460 nm, so verschieben sich die Abbildungen mit zunehmender Wellenlänge in Richtung der optischen Achse. Dabei ist die Abbildung bei 720 nm um 50 $\mu$m zur Abbildung bei 460 nm verschoben. In der Abbildungsebene bei 720 nm verschieben sich die Pinhole-Abbildungen mit zunehmender Wellenlänge von der optischen Achse weg. Dabei ist die Pinhole-Abbildung bei 460 nm um 60 $\mu$m gegenüber der Pinhole-Abbildung bei 720 nm verschoben. In der Messebene der besten Gesamtauflösung bei 545 nm verschieben sich die Abbildungen voneinander weg. Dabei sind die Abbildungen bei 460 nm gegenüber denen bei 720 nm um 60 $\mu$m verschoben, was eine Vergrößerung der überlagerten Strahlausdehnung hin zu einer Ellipse bedeutet. Zusätzlich werden am lateralen Rand des Messbereichs die Einflussbereiche der ROI's beschnitten, sodass sie nicht mehr exakt kreisförmig sind. Dies beeinflusst die laterale Auflösung am Rand des Messbereichs. (In diesem konkreten Beispiel entsprechen $\lambda_1$, $\lambda_2$, $\lambda_3$ den Wellenlängen 460, 545 und 720 nm ohne Einschränkung für deren Verwendung in anderen Figuren.)

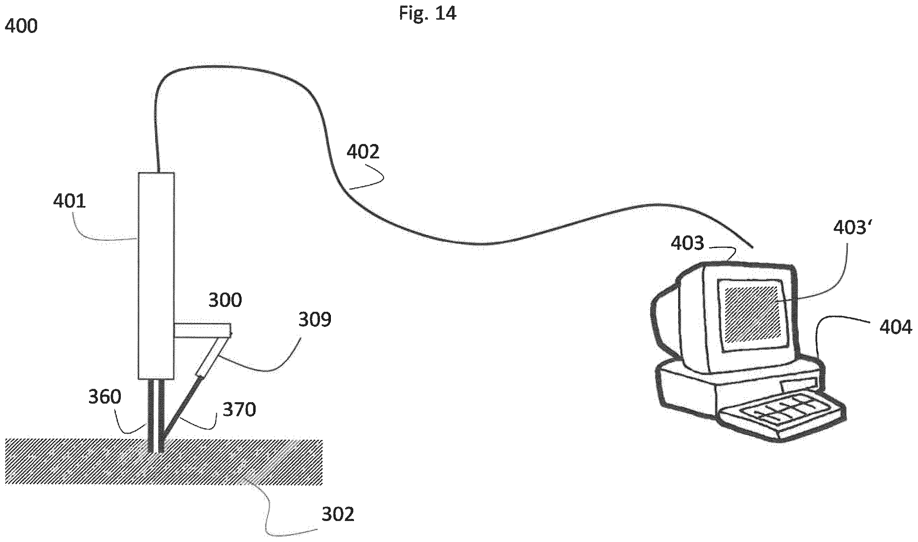

Im Folgenden wird eine mögliche Implementierung der chromatisch codierten, konfokalen, multifokalen, hyperspektralen 3D-Messvorrichtung 300 in einer Vorrichtung 400 beispielhaft erläutert. Dazu ist in **Fig. 14** schematisch eine mögliche Ausführungsform einer solchen Vorrichtung 400 dargestellt. Auch diese Darstellung soll als Beispiel und ausdrücklich nicht einschränkend auf den Schutzbereich der Erfindung verstanden werden.

Die Vorrichtung 400 umfasst eine chromatisch codierte, konfokale, multifokale, hyperspektrale 3D-Messvorrichtung 300 mit einer Hyperspektral-Lichteinstrahleinrichtung 309, die zur Ausleuchtung einer Oberfläche 302 eines Objekts dient. Die Vorrichtung 300 ist zumindest teilweise in einem Abschnitt (Scankopf) 401 der Vorrichtung 400 verbaut, der von einem Benutzer von Hand gehalten werden kann während der Verwendung. Aus diesem Abschnitt tritt Konfokal- und Hyperspektral-Licht aus, da die entsprechenden Strahlengänge, der Detektionsstrahlengang 360 und der Beleuchtungsstrahlengang 370 zumindest teilweise außerhalb des Abschnitts 401 liegen und somit die Oberfläche 302 eines Objektes erreichen können. Der Abschnitt 401 ist über ein Kabel 402 mit einer Auswerteeinheit 404 und einem Bildschirm 403, auf dem die Messergebnisse 403' abgebildet werden, verbunden. Das Kabel 402 kann beispielsweise ein Daten- und/oder Stromkabel umfassen. Ferner kann die Datenübertragung auch kabellos z.B. über W-LAN oder Bluetooth erfolgen. Die Vorrichtung 400 kann die Auswerteeinheit 404 und den Bildschirm 403 umfassen oder lediglich dazu ausgelegt sein mit irgendeiner externen Auswerteeinheit 404 und einem Bildschirm 403 verbunden zu werden. Die Vorrichtung 400 kann zumindest teilweise mobile Eigenschaften aufweisen. Beispielsweise kann lediglich der Abschnitt 401 der Vorrichtung 400, der von einem Benutzer von Hand gehalten werden kann, durch eine kabellose Verbindung zur Auswerteeinheit 404 mobil an verschiedenen Orten verwendet werden. Es kann aber auch eine Vorrichtung 400 die Auswerteeinheit 404 und Bildgebende Einheit 403 vollständig mobil an verschiedenen Orten eingesetzt werden, beispielsweise durch eine kompakte Bauweise und/oder eine Rollvorrichtung an den jeweiligen Elementen. Eine Vorrichtung 400, die optional mobile Eigenschaften aufweist, kann vorteilhaft für den vielfältigen Einsatz an vielfältigen Orten sein. Beispielsweise könnte eine derartige Vorrichtung 400, wie bereits erwähnt, zum einen an einer archäologischen Ausgrabungsstätte zur Charakterisierung von Oberflächen von Artefakten dienen, zum anderen könnte dieselbe Vorrichtung auch an einem anderen Ort, wie beispielsweise einem Biotop, zur Charakterisierung von Oberflächen von Pflanzen und/oder Tieren dienen.

In einer beispielhaften Ausführung hat der handgeführte Scankopf 401 ein Volumen von 260 mm $\times$ 50 mm $\times$ 65 mm und ein Gewicht von 500 g. Das für das konfokale optische Messsystem benötigte Licht kann von einer externen Xenonlichtquelle mittels Lichtleiter zugeführt werden. Die Recheneinheit zur Auswertung der detektierten spektralen Daten kann sich ebenfalls, wie die Lichtquelle, in einer externen Basisstation befinden. Auf dieser Basisstation befindet kann sich ein Monitor, an dem die detektierte Topographie dargestellt bzw. nachbearbeitet werden kann. Die Recheneinheit zur Auswertung der detektierten spektralen Daten kann sich ebenfalls, wie die Lichtquelle, in einer externen Basisstation befinden. Auf dieser Basisstation kann sich ein Monitor befinden, an dem die detektierte Topographie dargestellt bzw. nachbearbeitet werden kann.

Vorzugsweise, aber nicht ausschließlich, eignet eine solche Vorrichtung 400 zum Erfassen der Geometrie und spektralen materiellen Eigenschaften eines menschlichen Gebisses. Neben der Differenzierung von Hart- und Weichgewebe, insbesondere die Unterscheidung von Zähnen und Zahnfleisch bei der intraoralen Topographieerfassung, ist kann auch die objektive Bestimmung einer Zahnfarbe eine mögliche wichtige Funktion des erweiterten Messsystems. Deshalb kann optional, neben grundlegenden Untersuchungen zur spektralen und lateralen Auflösung des Messsystems, auch Messungen an der VITA classical A1 - D4® Farbskala und in vivo Messungen an humanen Zähnen durchgeführt werden.

**Bezugszeichenliste**

| 1 | Messvorrichtung |
|---|---|
| 2 | Oberfläche |
| 2' | Objekt |
| 3 | Konfokal-Lichteinstrahleinrichtung |
| 3' | Lichtquelle einer Konfokal-Lichteinstrahleinrichtung |
| 4 | Beleuchtungsmuster |
| 4' | Einrichtung zur Erzeugung eines multifolkalen Beleuchtungsmusters oder Mikrolinsenarray |
| 5 | Objektiv oder Hyperchromat mit chromatischer Aberration |
| 6 | Lochmuster |
| 7 | Spektraldispersive Einrichtung oder Spektrometer |
| 8 | Chromatisch codierte konfokale 3D-Detektionseinheit |
| 8' | Detektor oder CCD Kamera |
| 9 | Hyperspektral-Lichteinstrahleinrichtung |
| 9' | Lichtquelle einer Hyperspektral-Lichteinstrahleinrichtung |
| 10 | Kollimationsoptik oder Linse oder Fokussieroptik |
| 10' | Kollimationsoptik |
| 11 | Optische Achse |
| 12 | Einfallsachse |
| 13 | λ/4 Optik oder λ/4 Plättchen |
| 14 | Spektraler Filter oder Bandpassfarbfilter |
| 14' | Spektraler Filter oder Bandpassfarbfilter |
| 15 | Polarisationsoptik oder Polarisator |
| 16 | Strahlteiler oder Strahlteiler mit Polarisationseigenschaften |
| 60' | Konfokalstrahlengang |
| 60" | Detektionsstrahlengang |
| 70 | Beleuchtungsstrahlengang |
| 100 | Messvorrichtung oder Chromatisch codierte, konfokale Messeinheit mit Fokus auf oberer und unterer Messebene |
| 103 | Lichtquelle oder Weißlichtquelle |
| 105 | Objektiv mit chromatischer Aberration |
| 106 | Pinhole oder Lochblende |
| 107 | Spektraldispersive Einrichtung oder Spektrometer |
| 108 | Detektionseinheit oder CCD Kamera |
| 110 | Kollimationsoptik oder Linse oder Fokussieroptik |
| 111 | Optische Achse |
| 116 | Strahlteiler |
| 120 | Obere Messebene oder Fokusebene des blauen Lichts |
| 130 | Untere Messebene oder Fokusebene des roten Lichts |
| 140 | Axialer Messbereich |
| 150 | Lateraler Messbereich |
| 160' | Konfokalstrahlengang |
| 160" | Detektionsstrahlengang |
| 200 | Messvorrichtung zum Erfassen von multiplen Messpunkten auf Basis chromatisch codierter, konfokaler Abstandsmessung |
| 202 | Oberfläche |
| 202' | Objekt |
| 203 | Lichtquelle oder Weißlichtquelle |
| 204 | Einrichtung zur Erzeugung eines multifolkalen Beleuchtungsmusters oder Mikrolinsenarray |
| 205 | Objektiv mit chromatischer Aberration |
| 206 | Pinholearray oder 2D-Pinholearray oder Lochblendenfeld |
| 207 | Spektraldispersive Einrichtung oder Spektrometer |
| 208 | Detektor oder CCD Kamera |
| 210 | Kollimationsoptik oder Linse oder Fokussieroptik |
| 211 | Optische Achse |
| 216 | Strahlteiler |
| 300 | Messvorrichtung zur Messung einer Flächentopographie und spektralen Eigenschaft oder Hyperspektrales multifokales, konfokales chromatisch codiertes 3D-Messsystem integriert in einen Apparat |
| 302 | Oberfläche eines Objektes |
| 309 | Hyperspektral-Lichteinstrahleinrichtung |

| 360 | Teilweiser Detektionsstrahlengang |
| 370 | Teilweiser Beleuchtungsstrahlengang |
| 400 | Apparat umfassend die Messanordnung |
| 401 | Abschnitt des Apparats, welcher von dem Verwender von Hand gehalten werden kann während der Verwendung |
| 402 | Kabel |
| 403 | Bildgebende Einheit oder Bildschirm |
| 403' | Abbildung der Messergebnisse |
| 404 | Computer oder Bildverarbeitende Einheit oder Auswerteeinheit |
| $\alpha$ | Winkel zwischen Einfallsachse und optischer Achse |
| d | Distanz zwischen zwei abzubildenden Messpunkten der "region of interest" (ROI) |
| $\gamma_1$ | Polarisationszustand von Hyperspektral-Licht im Beleuchtungsstrahlengang |
| $\gamma_2$ | Polarisationszustand von Hyperspektral-Licht im Beleuchtungsstrahlengang |
| $\gamma_3$ | Polarisationszustand von Hyperspektral-Licht im Detektionsstrahlengang |
| $\gamma_4$ | Polarisationszustand von Hyperspektral-Licht im Detektionsstrahlengang |
| $\nu_1$ | Polarisationszustand von Konfokal-Licht im Detektionsstrahlengang |
| $\nu_2$ | Polarisationszustand von Konfokal-Licht im Detektionsstrahlengang |
| $l_1$ | Distanz zwischen Objekt und Objektiv |
| $l_2$ | Distanz zwischen Objektiv und Lochmuster |
| $l_3$ | Distanz zwischen Lochmuster und Detektionseinheit |
| $\lambda_1$ | Sichtbares Licht von kurzer Wellenlänge / Blaues Licht |
| $\lambda_2$ | Sichtbares Licht von langer Wellenlänge / Rotes Licht |
| $\lambda_3$ | Sichtbares Licht von mittlerer Wellenlänge / Grünes Licht |
| x | Raumrichtung senkrecht zu y und z |
| y | Raumrichtung senkrecht zu x und z |
| z | Raumrichtung senkrecht zu x und y |

**Patentansprüche**

1. Verfahren zum Erfassen topographischer und ortsaufgelöster, spektraler Eigenschaften einer zu untersuchenden Oberfläche (2), umfassend:

   - Erzeugen eines Beleuchtungsmusters (4) eines ersten Messlichts mit einer Vielzahl von Wellenlängen;
   - Abbilden des Beleuchtungsmusters (4) des ersten Messlichts auf die zu untersuchende Oberfläche (2) mittels eines chromatischen Objektivs (5) derart, dass das Beleuchtungsmuster (4) für unterschiedliche Wellenlängen der Vielzahl von Wellenlängen des ersten Messlichts in unterschiedlichen Abständen vom chromatischen Objektiv (5) scharf abgebildet wird;
   - Abbilden des von der zu untersuchenden Oberfläche (2) abgestrahlten ersten Messlichts mittels des chromatischen Objektivs (5) auf eine Konfokalmaske (6), welche ein zum Beleuchtungsmuster (4) korrespondierendes Transmissionsmuster aufweist;
   - spektrales Aufspalten des durch die Konfokalmaske (6) transmittierten ersten Messlichts;
   - ortsaufgelöstes Erfassen einer 2-dimensionalen Intensitätsverteilung des spektral aufgespaltenen ersten Messlichts mittels eines Detektors (8');
   - Ermitteln der topographischen Eigenschaften der zu untersuchenden Oberfläche (2) anhand der mittels des Detektors (8') erfassten Intensitätsverteilung des ersten Messlichts, **gekennzeichnet durch**:

      - homogenes Beleuchten der zu untersuchenden Oberfläche (2) mittels eines zweiten Messlichts mit einer Vielzahl von Wellenlängen;
      - Abbilden des von der zu untersuchenden Oberfläche (2) abgestrahlten zweiten Messlichts mittels des chromatischen Objektivs (5) auf die Konfokalmaske (6);
      - spektrales Aufspalten des durch die Konfokalmaske (6) transmittierten zweiten Messlichts;
      - ortsaufgelöstes Erfassen einer 2-dimensionalen Intensitätsverteilung des spektral aufgespaltenen zweiten Messlichts mittels des Detektors (8'); und
      - Ermitteln der ortsaufgelösten, spektralen Eigenschaften der zu untersuchenden Oberfläche (2) anhand der mittels des Detektors (8') erfassten Intensitätsverteilung des zweiten Messlichts.

2. Verfahren nach Anspruch 1, wobei das Erzeugen des Beleuchtungsmusters (4) des ersten Messlichts ein Erzeugen eines zweidimensionalen Arrays von Fokalpunkten des ersten Messlichts mittels eines Arrays von Mikrolinsen (4') erfolgt.

3.  Verfahren nach Anspruch 1 oder 2, wobei die Konfokalmaske (6) eine Lochblende (6) mit einem zweidimensionalen Array von Pinholes umfasst.

4.  Verfahren nach einem der vorangegangenen Ansprüche, wobei das erste und/oder zweite Messlicht ein spektrales Kontinuum von Wellenlängen umfasst.

5.  Verfahren nach einem der vorangegangenen Ansprüche, wobei das ortsaufgelöste Erfassen der 2-dimensionalen Intensitätsverteilung des spektral aufgespaltenen ersten und/oder zweiten Messlichts mittels des Detektors (8') ein Abbilden des Transmissionsmusters der Konfokalmaske (6) auf eine Sensorfläche des Detektors (8') umfasst.

6.  Verfahren nach Anspruch 5 in Kombination mit Anspruch 3, wobei das Abbilden des Arrays von Pinholes der Konfokalmaske (6) auf die Sensorfläche derart erfolgt, dass die spektral aufgespaltenen Abbildungen benachbarter Pinholes auf der Sensorfläche innerhalb der Wellenlängen des ersten und/oder zweiten Messlichts nicht überlappen.

7.  Verfahren nach einem der vorangegangenen Ansprüche, wobei das zweite Messlicht unter einem anderen Winkel auf die zu untersuchende Oberfläche (2) gestrahlt wird als das erste Messlicht.

8.  Verfahren nach einem der vorangegangenen Ansprüche, wobei das Abbilden des Beleuchtungsmusters (4) des ersten Messlichts auf die zu untersuchende Oberfläche (2) und das homogene Beleuchten der zu untersuchenden Oberfläche (2) mittels des zweiten Messlichts nacheinander erfolgen.

9.  Verfahren nach einem der vorangegangenen Ansprüche, wobei eine Lage der zu untersuchenden Oberfläche (2) relativ zu den Fokalebenen des chromatischen Objektivs (5) verändert wird und das ortsaufgelöste Erfassen der 2-dimensionalen Intensitätsverteilung des spektral aufgespaltenen ersten und/oder zweiten Messlichts mittels des Detektors (8') für unterschiedliche Lagen der zu untersuchenden Oberfläche (2) wiederholt wird.

10. Vorrichtung zum Erfassen topographischer und ortsaufgelöster, spektraler Eigenschaften einer zu untersuchenden Oberfläche (2), umfassend:

    - eine erste Messlichteinrichtung (3) zum Erzeugen eines Beleuchtungsmusters (4) eines ersten Messlichts mit einer Vielzahl von Wellenlängen;
    - eine zweite Messlichteinrichtung (9) zum homogenen Beleuchten der zu untersuchenden Oberfläche (2) mittels eines zweiten Messlichts mit einer Vielzahl von Wellenlängen;
    - eine Konfokalabbildungseinrichtung mit einem chromatischen Objektiv (5) und einer Konfokalmaske (6), welche ein zum Beleuchtungsmuster (4) der ersten Messlichteinrichtung korrespondierendes Transmissionsmuster aufweist, derart, dass die Konfokalabbildungseinrichtung ausgelegt ist zum

        -- Abbilden des Beleuchtungsmusters (4) des ersten Messlichts auf die zu untersuchende Oberfläche (2) mittels des chromatischen Objektivs (5) derart, dass das Beleuchtungsmuster (4) für unterschiedliche Wellenlängen der Vielzahl von Wellenlängen des ersten Messlichts in unterschiedlichen Abständen vom chromatischen Objektiv (5) scharf abgebildet wird; und
        -- Abbilden des von der zu untersuchenden Oberfläche (2) abgestrahlten ersten Messlichts mittels des chromatischen Objektivs (5) auf die Konfokalmaske (6);

    - eine Spektralaufspalteinrichtung (7) zum spektralen Aufspalten des durch die Konfokalmaske (6) transmittierten ersten und zweiten Messlichts;
    - einen Detektor (8') zum ortsaufgelösten Erfassen einer 2-dimensionalen Intensitätsverteilung des spektral aufgespaltenen ersten und zweiten Messlichts; und
    - eine Auswerteeinrichtung (80) zum Ermitteln der topographischen Eigenschaften der zu untersuchenden Oberfläche (2) anhand der mittels des Detektors (8') erfassten Intensitätsverteilung des ersten Messlichts und zum Ermitteln der ortsaufgelösten, spektralen Eigenschaften der zu untersuchenden Oberfläche (2) anhand der mittels des Detektors (8') erfassten Intensitätsverteilung des zweiten Messlichts.

11. Vorrichtung nach Anspruch 10, wobei die zweite Messlichteinrichtung eine ringförmige Lichtquelle umfasst, die vorzugsweise symmetrisch um eine optische Achse des chromatischen Objektivs (5) herum angeordnet ist.

**12.** Vorrichtung nach Anspruch 10 oder 11, des Weiteren umfassend eine Polarisationseinrichtung (13) zur Reduktion des Anteils von dem an der zu untersuchenden Oberfläche (2) reflektierten zweiten Messlicht in dem mittels des Detektors (8') erfassten zweiten Messlicht.

**Claims**

**1.** A method for detecting topographical and spatially resolved, spectral properties of a surface (2) to be examined, comprising:

- generating an illumination pattern (4) of a first measuring light with a plurality of wavelengths;
- imaging the illumination pattern (4) of the first measuring light onto the surface (2) to be examined by means of a chromatic objective (5) such that the illumination pattern (4) for different wavelengths of the plurality of wavelengths of the first measuring light is imaged sharply at different distances from the chromatic objective (5);
- imaging the first measuring light emitted from the surface (2) to be examined by means of the chromatic objective (5) onto a confocal mask (6) having a transmission pattern corresponding to the illumination pattern (4);
- spectrally splitting the first measuring light transmitted through the confocal mask (6);
- spatially resolved detection of a 2-dimensional intensity distribution of the spectrally split first measuring light by means of a detector (8');
- determining the topographical properties of the surface (2) to be examined on the basis of the intensity distribution of the first measuring light detected by means of the detector (8'), **characterized by**:

- homogeneously illuminating the surface (2) to be examined by means of a second measuring light with a plurality of wavelengths;
- imaging the second measuring light emitted from the surface (2) to be examined by means of the chromatic objective (5) onto the confocal mask (6);
- spectrally splitting the second measuring light transmitted through the confocal mask (6);
- spatially resolved detection of a 2-dimensional intensity distribution of the spectrally split second measuring light by means of the detector (8'); and
- determining the spatially resolved, spectral properties of the surface (2) to be examined on the basis of the intensity distribution of the second measuring light detected by means of the detector (8').

**2.** The method according to claim 1, wherein generating the illumination pattern (4) of the first measuring light comprises generating a two-dimensional array of focal points of the first measuring light by means of an array of microlenses (4').

**3.** The method according to claim 1 or 2, wherein the confocal mask (6) comprises a pinhole aperture (6) with a two-dimensional array of pinholes.

**4.** The method according to one of the preceding claims, wherein the first and/or second measuring light comprises a spectral continuum of wavelengths.

**5.** The method according to one of the preceding claims, wherein the spatially resolved detection of the 2-dimensional intensity distribution of the spectrally split first and/or second measuring light by means of the detector (8') comprises imaging the transmission pattern of the confocal mask (6) onto a sensor surface of the detector (8').

**6.** The method according to claim 5 in combination with claim 3, wherein imaging the array of pinholes of the confocal mask (6) onto the sensor surface takes place such that the spectrally split images of adjacent pinholes on the sensor surface do not overlap within the wavelengths of the first and/or second measuring light.

**7.** The method according to one of the preceding claims, wherein the second measuring light is radiated onto the surface (2) to be examined at a different angle than the first measuring light.

**8.** The method according to one of the preceding claims, wherein imaging the illumination pattern (4) of the first measuring light onto the surface (2) to be examined and homogeneously illuminating the surface (2) to be examined by means of the second measuring light take place successively.

**9.** The method according to one of the preceding claims, wherein a position of the surface (2) to be examined is changed relative to the focal planes of the chromatic objective (5) and the spatially resolved detection of the 2-dimensional intensity distribution of the spectrally split first and/or second measuring light by means of the detector (8') is repeated for different positions of the surface (2) to be examined.

10. An apparatus for detecting topographical and spatially resolved, spectral properties of a surface (2) to be examined, comprising:

- a first measuring light device (3) for generating an illumination pattern (4) of a first measuring light with a plurality of wavelengths;
- a second measuring light device (9) for homogeneously illuminating the surface (2) to be examined by means of a second measuring light with a plurality of wavelengths;
- a confocal imaging device with a chromatic objective (5) and a confocal mask (6) having a transmission pattern corresponding to the illumination pattern (4) of the first measuring light device, such that the confocal imaging device is configured to

-- image the illumination pattern (4) of the first measuring light onto the surface (2) to be examined by means of the chromatic objective (5) such that the illumination pattern (4) for different wavelengths of the plurality of wavelengths of the first measuring light is imaged sharply at different distances from the chromatic objective (5); and
-- image the first measuring light emitted from the surface (2) to be examined by means of the chromatic objective (5) onto the confocal mask (6);

- a spectral splitting device (7) for spectrally splitting the first and second measuring light transmitted through the confocal mask (6);
- a detector (8') for a spatially resolved detection of a 2-dimensional intensity distribution of the spectrally split first and second measuring light; and
- an evaluation device (80) for determining the topographical properties of the surface (2) to be examined on the basis of the intensity distribution of the first measuring light detected by means of the detector (8') and for determining the spatially resolved, spectral properties of the surface (2) to be examined on the basis of the intensity distribution of the second measuring light detected by means of the detector (8').

11. The device according to claim 10, wherein the second measuring light device comprises a ring-shaped light source preferably arranged symmetrically around an optical axis of the chromatic objective (5).

12. The device according to claim 10 or 11, further comprising a polarization device (13) for reducing the proportion of the second measuring light reflected on the surface (2) to be examined in the second measuring light detected by means of the detector (8').

**Revendications**

1. Procédé de détection de propriétés spectrales, topographiques et à résolution spatiale d'une surface à examiner (2), comprenant :

- génération d'un modèle d'éclairage (4) d'une première lumière de mesure avec une pluralité de longueurs d'onde ;
- représentation du modèle d'éclairage (4) de la première lumière de mesure sur la surface à examiner (2) au moyen d'une lentille chromatique (5) de telle sorte que le modèle d'éclairage (4) est représenté de manière nette pour différentes longueurs d'onde de la pluralité de longueurs d'onde de la première lumière de mesure à différents écarts de la lentille chromatique (5) ;
- représentation de la première lumière de mesure irradiée par la surface à examiner (2) au moyen de la lentille chromatique (5) sur un masque confocal (6) qui présente un modèle de transmission correspondant au modèle d'éclairage (4) ;
- division spectrale de la première lumière de mesure transmise à travers le masque confocal (6) ;
- détection à résolution spatiale d'une répartition d'intensités bidimensionnelle de la première lumière de mesure à division spectrale au moyen d'un détecteur (8') ;
- détermination des propriétés topographiques de la surface à examiner (2) à l'aide de la répartition d'intensités de la première lumière de mesure, détectée au moyen du détecteur (8'), **caractérisé par** :

- éclairage homogène de la surface à examiner (2) au moyen d'une seconde lumière de mesure avec une pluralité de longueurs d'onde ;
- représentation de la seconde lumière de mesure irradiée par la surface à examiner (2) au moyen de la lentille chromatique (5) sur le masque confocal (6) ;
- division spectrale de la seconde lumière de mesure transmise à travers le masque confocal (6) ;
- détection à résolution spatiale d'une répartition d'intensités bidimensionnelle de la seconde lumière de mesure à division spectrale au moyen du détecteur (8') ; et
- détermination des propriétés spectrales, à résolution spatiale de la surface à examiner (2) à l'aide de la répartition d'intensités de la seconde lumière de mesure, détectée au moyen du détecteur (8').

2.  Procédé selon la revendication 1, dans lequel la génération du modèle d'éclairage (4) de la première lumière de mesure effectue une génération d'un réseau bidimensionnel de foyers de la première lumière de mesure au moyen d'un réseau de microlentilles (4').

3.  Procédé selon la revendication 1 ou 2, dans lequel le masque confocal (6) comprend un diaphragme à trou (6) avec un réseau bidimensionnel de trous d'épingle.

4.  Procédé selon une des revendications précédentes, dans lequel la première et/ou seconde lumière de mesure comprend un continuum spectral de longueurs d'onde.

5.  Procédé selon une des revendications précédentes, dans lequel la détection à résolution spatiale de la répartition d'intensités bidimensionnelle de la première et/ou seconde lumière de mesure à division spectrale au moyen du détecteur (8') comprend une représentation du modèle de transmission du masque confocal (6) sur une face de capteur du détecteur (8').

6.  Procédé selon la revendication 5 en combinaison avec la revendication 3, dans lequel la représentation du réseau de trous d'épingle du masque confocal (6) sur la face de capteur s'effectue de telle sorte que les représentations à division spectrale de trous d'épingle voisins sur la face de capteur ne se chevauchent pas au sein des longueurs de la première et/ou seconde lumière de mesure.

7.  Procédé selon une des revendications précédentes, dans lequel la seconde lumière de mesure est irradiée à un autre angle sur la surface à examiner (2) que la première lumière de mesure.

8.  Procédé selon une des revendications précédentes, dans lequel la représentation du modèle d'éclairage (4) de la première lumière de mesure sur la surface à examiner (2) et l'éclairage homogène de la surface à examiner (2) au moyen de la seconde lumière de mesure s'effectuent successivement.

9.  Procédé selon une des revendications précédentes, dans lequel une position de la surface à examiner (2) par rapport aux plans focaux de la lentille chromatique (5) est modifiée et la détection à résolution spatiale de la répartition d'intensités bidimensionnelle de la première et/ou seconde lumière de mesure à division spectrale au moyen du détecteur (8') est répétée pour différentes positions de la surface à examiner (2).

10. Dispositif de détection de propriétés spectrales, topographiques et à résolution spatiale d'une surface à examiner (2), comprenant :

- une première installation de lumière de mesure (3) pour la génération d'un modèle d'éclairage (4) d'une première lumière de mesure avec une pluralité de longueurs d'onde ;
- une seconde installation de lumière de mesure (9) pour l'éclairage homogène de la surface à examiner (2) au moyen d'une seconde lumière de mesure avec une pluralité de longueurs d'onde ;
- une installation de représentation confocale avec une lentille chromatique (5) et un masque confocal (6) qui présente un modèle de transmission correspondant au modèle d'éclairage (4) de la première installation de lumière de mesure de telle sorte que l'installation de représentation confocale est conçue pour la

-- représentation du modèle d'éclairage (4) de la première lumière de mesure sur la surface à examiner (2) au moyen de la lentille chromatique (5) de telle sorte que le modèle d'éclairage (4) est représenté de manière nette pour différentes longueurs d'onde de la pluralité de longueurs d'onde de la première lumière de mesure à différents écarts de la lentille chromatique (5) ; et
-- représentation de la première lumière de mesure irradiée par la surface à examiner (2) au moyen de la lentille chromatique (5) sur le masque confocal (6) ;

- une installation de division spectrale (7) pour la division spectrale de la première et seconde lumière de mesure transmise à travers le masque confocal (6) ;
- un détecteur (8') pour la détection à résolution spatiale d'une répartition d'intensités bidimensionnelle de la première et seconde lumière de mesure à division spectrale ; et
- une installation d'évaluation (80) pour la détermination des propriétés topographiques de la surface à examiner (2) à l'aide de la répartition d'intensités de la première lumière de mesure, détectée au moyen du détecteur (8'), et pour la détermination des propriétés spectrales, à résolution spatiale de la surface à examiner (2) à l'aide de la répartition d'intensités de la seconde lumière de mesure, détectée au moyen du détecteur (8').

11. Dispositif selon la revendication 10, dans lequel la seconde installation de lumière de mesure comprend une source de lumière annulaire qui est disposée de préférence symétriquement autour d'un axe optique de la lentille chromatique (5).

12. Dispositif selon la revendication 10 ou 11, comprenant en outre une installation de polarisation (13) pour la réduction de la proportion de la seconde lumière de mesure réfléchie sur la surface à examiner (2) dans la seconde lumière de mesure détectée au moyen du détecteur (8').

Fig. 1

EP 3 568 667 B1

## Fig. 2

Fig. 3

Fig. 4

EP 3 568 667 B1

## Fig. 5

Messebene im oberen Messbereich

Messebene im medialen Messbereich

Messebene im unteren Messbereich

Chromatisches Objektiv

Chromatisches Objektiv

Chromatisches Objektiv

$\lambda_1$
$\lambda_2$
$\lambda_3$

120

140 axialer Messbereich

130

11

11

lateraler Messbereich
150

·········· $\lambda_1$ = 458 nm

------ $\lambda_3$ = 590 nm

— — $\lambda_2$ = 720 nm

EP 3 568 667 B1

## Fig. 6

Messbereich axial und lateral in der Mitte

Messbereich axial mittig und lateral am Rand

Chromatisches Objektiv

Chromatisches Objektiv

$\lambda_1$

$\lambda_2$

$\lambda_3$

11

120

130

axialer Messbereich

140

lateraler Messbereich

150

$\lambda_1 = 458$ nm
$\lambda_3 = 590$ nm
$\lambda_2 = 720$ nm

Fig. 7

EP 3 568 667 B1

Fig. 8

Fig. 9

Fig. 10

Fig. 11

EP 3 568 667 B1

Fig. 12

EP 3 568 667 B1

Fig. 13

Fig. 14

400

401

300

309

360

370

302

402

403

403'

404

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006007172 B4
- DE 102007019267 A1
- US 2005283065 A1
- DE 102005043627 A1
- US 9494529 B1